# EUROPEAN PATENT APPLICATION

(11) **EP 4 734 469 A1**
(43) Date of publication of application: **29.04.2026**
(21) Application number: 24842256.0
(22) Date of filing: 10.07.2024
(51) Int. Cl.: H04L 41/16

(54) **ARTIFICIAL INTELLIGENCE MANAGEMENT METHOD AND COMMUNICATION APPARATUS**

(30) Priority: 20.07.2023 CN 202310898289
(71) Applicant: Huawei Technologies Co., Ltd., Shenzhen, Guangdong 518129 (CN)
(72) Inventor: CHAI, Xiaomeng, Shenzhen, Guangdong 518129 (CN); TIAN, Yang, Shenzhen, Guangdong 518129 (CN); LI, Yuan, Shenzhen, Guangdong 518129 (CN); SUN, Yan, Shenzhen, Guangdong 518129 (CN)
(74) Representative: Gill Jennings & Every LLP
(86) International application number: PCT/CN2024/104723
(87) International publication number: WO 2025/016262

(57) **Abstract**

This application provides a method for managing artificial intelligence and a communication apparatus, and relates to the field of communication technologies. The method provides a solution that can effectively reduce identification overheads between a terminal device and a network device. Specifically, the method includes: The terminal device sends a first identifier and a second identifier to a first network device, where the first identifier is an identifier configured by a second network device for a first model successfully identified between the second network device and the terminal device, the second identifier identifies a first area, and the first identifier is unique in the first area. The first network device obtains model information of the first model based on the first identifier and the second identifier, determines whether the first model is available, and sends, to the terminal device, response information indicating whether the first model is available. In this way, the terminal device and the first network device may not perform a complete identification procedure of the successfully identified model again. This can effectively reduce identification overheads between the terminal device and the network device.

## Description

This application claims priority to Chinese Patent Application No. 202310898289.2, filed with the China National Intellectual Property Administration on July 20, 2023 and entitled "METHOD FOR MANAGING ARTIFICIAL INTELLIGENCE AND COMMUNICATION APPARATUS", which is incorporated herein by reference in its entirety.

### TECHNICAL FIELD

This application relates to the field of communication technologies, and more specifically, to a method for managing artificial intelligence and a communication apparatus.

### BACKGROUND

Artificial intelligence (artificial intelligence, AI) has been widely applied to the field of communication technologies, to improve communication performance between a terminal device and a network device. In specific application of the AI, the terminal device and the network device perform model identification on an AI model, so that the terminal device and the network device can reach a common understanding of the AI model. For example, the terminal device reports, to the network device, information such as an AI model supported by the terminal device, an application scenario of the Al model, and a corresponding parameter configuration (the information may also be collectively referred to as model information), and the network device configures a model identifier for the AI model, where the model identifier identifies the AI model.

However, an existing identification procedure between the terminal device and the network device causes high identification overheads. Therefore, how to effectively reduce the identification overheads between the terminal device and the network device is an urgent technical problem to be resolved.

### SUMMARY

This application provides a method for managing artificial intelligence and a communication apparatus, to effectively reduce model identification overheads between a terminal device and a network device.

According to a first aspect, a method for managing artificial intelligence is provided, and includes: sending a first identifier and a second identifier to a first network device, where the first identifier is an identifier configured for a first model and is from a second network device, the first model is a model successfully identified between the second network device and a terminal device, the second identifier identifies a first area, the first identifier is unique in the first area, and the first identifier includes at least one of a model identifier and a function identifier; and receiving response information from the first network device, where the response information indicates whether the first model is available.

The solution according to the first aspect may be executed by the terminal device, may be executed by a module or a chip configured to execute a function of the terminal device, or the like. This is not limited. For ease of description, the terminal device is used as an example for description in embodiments of this application.

Specifically, when the terminal device and the first network device identify the successfully identified first model again, the terminal device and the first network device may not exchange complete information (for example, information such as a type of an AI model supported by the terminal device, an application scenario of the AI model, and a corresponding parameter configuration) identifying the first model, but exchange only the first identifier and the second identifier, and the first network device can obtain the complete information about the first model based on the first identifier and the second identifier. This can effectively reduce identification overheads between the terminal device and the first network device.

According to the foregoing solution, an identification procedure between the terminal device and the network device can be simplified, and the identification overheads between the terminal device and the network device can be effectively reduced.

In a possible implementation, the response information indicates that the first model is available; and the method further includes: receiving a third identifier from the first network device, where the third identifier is an identifier configured by the first network device for the first model.

In this way, the first network device may configure a new identifier for the model, to help the terminal device and the first network device identify and understand the first model.

In a possible implementation, that the response information indicates that the first model is available includes: The response information includes the third identifier.

In this way, a new identifier is delivered, so that the terminal device may determine, based on the new identifier, that the first model is available.

In a possible implementation, the response information indicates that the first model is unavailable; and the method further includes: receiving at least one of a second model and information about the second model from the first network device, where the information about the second model is for activating the second model.

In this way, the terminal device and the first network device can complete identification on a new model.

In a possible implementation, the response information indicates that the first model is unavailable; and the method further includes: receiving, from the first network device, information indicating the terminal device to fall back to a non-artificial intelligence AI mode.

In this way, the indication that the first model is unavailable may be completed.

In a possible implementation, the response information indicates that the first model is unavailable; and the method further includes: receiving, from the first network device, information indicating the terminal device to perform a complete identification procedure.

In this way, the indication that the first model is unavailable may be completed.

In a possible implementation, that the response information indicates that the first model is unavailable includes: The response information includes the at least one of the second model and the information about the second model.

In this way, the indication that the first model is unavailable may be completed.

In a possible implementation, that the response information indicates that the first model is unavailable includes: The response information includes the information indicating the terminal device to fall back to the non-AI mode.

In this way, the indication that the first model is unavailable may be completed.

In a possible implementation, that the response information indicates that the first model is unavailable includes: The response information indicates the terminal device to perform the complete identification procedure.

In this way, the indication that the first model is unavailable may be completed.

In a possible implementation, the response information includes the first identifier. In this way, whether the first model is available may be indicated.

In a possible implementation, the method further includes: receiving the first identifier from the second network device.

In this way, the terminal device may report the first identifier to the first network device.

In a possible implementation, the method further includes: receiving the second identifier from the second network device.

In this way, the terminal device may report the second identifier to the first network device.

According to a second aspect, a method for managing artificial intelligence is provided, and includes: receiving a first identifier and a second identifier from a terminal device, where the first identifier is an identifier configured by a first network device for a first model, the first model is a model successfully identified between the first network device and the terminal device, the second identifier identifies a first area, the first identifier is unique in the first area, and the first identifier includes at least one of a model identifier and a function identifier; obtaining model information of the first model based on the first identifier and the second identifier, and determining whether the first model is available; and sending response information to the terminal device, where the response information indicates whether the first model is available.

The solution according to the second aspect may be executed by a second network device, may be executed by a module or a chip configured to execute a function of the second network device, or the like. This is not limited. For ease of description, the second network device is used as an example for description in embodiments of this application.

Specifically, the second network device may obtain model information of a model 1 based on an identifier 1 and an identifier 2, and complete identification processing on the model 1 based on the model information of the model 1. The second network device may obtain the model information of the model 1 not from the terminal device. This can effectively reduce identification overheads between the terminal device and the second network device.

According to the foregoing solution, an identification procedure between the terminal device and the network device can be simplified, and the identification overheads between the terminal device and the network device can be effectively reduced.

In a possible implementation, the response information indicates that the first model is available; and the method further includes: sending a third identifier to the terminal device, where the third identifier identifies the first model.

In this way, the second network device may configure a new identifier for the first model, to help the terminal device and the second network device identify and understand the first model.

In a possible implementation, that the response information indicates that the first model is available includes: The response information includes the third identifier.

In this way, a new identifier is delivered, so that the terminal device may determine, based on the new identifier, that the first model is available.

In a possible implementation, the response information indicates that the first model is unavailable; and the method further includes: sending at least one of a second model and information about the second model to the terminal device, where the second model is different from the first model, and the information about the second model is for activating the second model.

In this way, the terminal device and the network device can complete identification on a new model.

In a possible implementation, the response information indicates that the first model is unavailable; and the method further includes: sending, to the terminal device, indication information for the terminal device to fall back to a non-artificial intelligence AI mode.

In this way, the indication that the first model is unavailable may be completed.

In a possible implementation, the response information indicates that the first model is unavailable; and the method further includes: sending, to the terminal device, indication information for the terminal device to perform a complete identification procedure.

In this way, the indication that the first model is unavailable may be completed.

In a possible implementation, that the response information indicates that the first model is unavailable includes: The response information includes the at least one of the second model and the information about the second model.

In this way, the indication that the first model is unavailable may be completed.

In a possible implementation, that the response information indicates that the first model is unavailable includes: The response information includes information indicating the terminal device to fall back to the non-AI mode.

In this way, the indication that the first model is unavailable may be completed.

In a possible implementation, that the response information indicates that the first model is unavailable includes: The response information indicates the terminal device to perform the complete identification procedure.

In this way, the indication that the first model is unavailable may be completed.

In a possible implementation, the response information includes the first identifier.

With reference to the solution according to any one of the first aspect, the second aspect, and the like, a type of the second identifier includes at least one of the following: a cell identifier, a cell group identifier, a tracking area identifier, a service area identifier, or a timing advance group identifier, where an association relationship exists between a type of the first area and the type of the second identifier.

For example, when the type of the second identifier is the cell identifier, the first area includes one or more cells; when the type of the second identifier is the cell group identifier, the first area includes one or more cell groups; when the type of the second identifier is the tracking area identifier, the first area includes one or more tracking areas; when the type of the second identifier is the service area identifier, the first area includes one or more service areas; when the type of the second identifier is the timing advance group identifier, the first area includes one or more timing advance groups; or when the type of the second identifier is the tracking area identifier and the service area identifier, the first area includes one or more tracking areas and one or more service areas.

In this way, compatibility with an existing standard can be implemented.

With reference to the solution according to any one of the first aspect, the second aspect, and the like, an area of the first network device belongs to the first area.

In this way, a problem of an identifier identification conflict can be avoided.

With reference to the solution according to any one of the first aspect, the second aspect, and the like, the first identifier is carried in at least one of the following messages: a random access message, a radio resource control RRC configuration request message, an RRC configuration complete message, an RRC reconfiguration complete message, an RRC reestablishment request message, or a physical layer message.

In this way, the foregoing identification procedure can be completed by using a specific communication message.

With reference to the solution according to any one of the first aspect, the second aspect, and the like, the second identifier is carried in at least one of the following messages: a random access message, a radio resource control RRC configuration request message, an RRC configuration complete message, an RRC reconfiguration complete message, an RRC reestablishment request message, or a physical layer message.

In this way, the foregoing identification procedure can be completed by using a specific communication message.

With reference to the solution according to any one of the first aspect, the second aspect, and the like, the first network device manages a first cell, where the first cell is a cell on which the terminal device currently camps; and the second network device manages a second cell, where the second cell is a source cell of the terminal device.

In this way, when the terminal device is handed over to a new cell, the terminal device and a network device corresponding to the cell to which the terminal device is newly handed over may perform identification by using the foregoing solution. This can effectively reduce the identification overheads between the terminal device and the network device.

According to a third aspect, a method for managing artificial intelligence is provided, and includes: receiving model information of a first model from a first network device, where the first model is a model successfully identified between the first network device and a terminal device; performing identification processing on the first model based on the model information of the first model, and determining whether the first model is available; and sending indication information to the terminal device, where the indication information indicates whether the first model is available.

In a possible implementation, the first network device manages a first cell, where the first cell is a source cell of the terminal device; and a second network device manages a second cell, where the second cell is a cell on which the terminal device currently camps.

The solution according to the third aspect may be executed by the second network device, may be executed by a module or a chip configured to execute a function of the second network device, or the like. This is not limited. For ease of description, the second network device is used as an example for description in embodiments of this application.

Specifically, the second network device may obtain the model message of the first model from the first network device, and complete identification on the first model based on the model information of the first model. The second network device may obtain the model information of the first model not from the terminal device. This can effectively reduce identification overheads between the terminal device and the second network device.

According to the foregoing solution, an identification procedure between the terminal device and the network device can be simplified, and the identification overheads between the terminal device and the network device can be effectively reduced.

In a possible implementation, the indication information indicates that the first model is available; and the method further includes: sending a first identifier to the terminal device, where the first identifier identifies the first model.

In this way, the second network device may configure an identifier for the first model, to help the terminal device and the second network device identify and understand the first model.

In a possible implementation, the first identifier is unique in a first area, that is, an area of the second network device belongs to the first area.

In this way, a problem of an identifier identification conflict can be avoided.

In a possible implementation, the first identifier is carried in at least one of the following messages: a random access message, a radio resource control RRC configuration request message, an RRC configuration complete message, an RRC reconfiguration complete message, an RRC reestablishment request message, or a physical layer message.

In this way, the foregoing identification procedure can be completed by using a specific communication message.

In a possible implementation, the indication information indicates that the first model is unavailable; and the method further includes: sending at least one of a second model and information about the second model to the terminal device, where the second model is different from the first model, and the information about the second model is for activating the second model.

In this way, the terminal device and the second network device can complete identification on a new model.

According to a fourth aspect, a method for managing artificial intelligence is provided, and includes: sending indication information to a network device, where the indication information indicates that update processing has been performed on a first model, and the first model is a model successfully identified between the network device and a terminal device.

The solution according to the fourth aspect may be executed by the terminal device, may be executed by a module or a chip configured to execute a function of the terminal device, or the like. This is not limited. For ease of description, the terminal device is used as an example for description in embodiments of this application.

Specifically, the terminal device may cause, by using the indication information, the network device to sense that update processing has been performed on a successfully identified model, to effectively reduce identification overheads between the terminal device and the network device. In addition, this can also prevent the terminal device and the network device from again performing a complete identification procedure of the model on which update processing has been performed.

In a possible implementation, the method further includes: receiving response information from the network device, where the response information includes an identifier configured by the network device for the updated first model, or the response information indicates to inherit an identifier of the first model.

In this way, the network device may feed back, to the terminal device, that the network device has sensed that update processing has been performed on the first model.

According to a fifth aspect, a method for managing artificial intelligence is provided, and includes: receiving indication information from a terminal device, where the indication information indicates that update processing has been performed on a first model, and the first model is a model successfully identified between the terminal device and a network device; and sending response information to the terminal device based on the indication information, where the response information includes an identifier configured by the network device for the updated first model, or the response information indicates to inherit an identifier of the first model.

The solution according to the fifth aspect may be executed by the network device, may be executed by a module or a chip configured to execute a function of the network device, or the like. This is not limited. For ease of description, the network device is used as an example for description in embodiments of this application.

According to the foregoing technical solution, the network device may sense that update processing is performed on the successfully identified model, and indicate, to the terminal device, that the network device has sensed that update processing has been performed on the first model.

With reference to the solution according to any one of the fourth aspect, the fifth aspect, and the like, in a possible implementation, the indication information includes any one of the following: information about performance of the updated first model, or the identifier of the first model.

In this way, the network device can sense that update processing is performed on the first model.

According to a sixth aspect, a method for managing artificial intelligence is provided, and includes: receiving indication information from a network device, where the indication information indicates to deregister an identifier of at least one model; and deregistering the identifier of the at least one model based on the indication information, where each of the at least one model is a model successfully identified between the network device and a terminal device.

The solution according to the sixth aspect may be executed by the terminal device, may be executed by a module or a chip configured to execute a function of the terminal device, or the like. This is not limited. For ease of description, the terminal device is used as an example for description in embodiments of this application.

Specifically, the terminal device deregisters the identifier of the at least one model based on an indication of the network device. In this way, a bit length of the identifier of the model can be effectively reduced, to help reduce identification overheads between the terminal device and the network device.

In a possible implementation, before the receiving the indication information from the network device, the method further includes: sending request information to the network device, where the request information is for requesting to deregister the identifier of the at least one model.

In this way, the terminal device can actively propose to deregister identifiers of some models.

In a possible implementation, the method further includes: sending response information to the network device, where the response information indicates whether the indication information is successfully received.

In this way, the network device can determine whether the terminal device successfully receives the indication information.

According to a seventh aspect, a method for managing artificial intelligence is provided, and includes: sending indication information to a terminal device, where the indication information indicates to deregister an identifier of at least one model, and each of the at least one model is a model successfully identified between the terminal device and a network device.

In a possible implementation, the method further includes: receiving request information from the terminal device, where the request information is for requesting to deregister the identifier of the at least one model.

In a possible implementation, the method further includes: receiving response information from the terminal device, where the response information indicates whether the indication information is successfully received.

With reference to the solution according to any one of the sixth aspect, the seventh aspect, and the like, in a possible implementation, the indication information includes at least one of the following: an identifier of each of the at least one model, or model information of each of the at least one model.

With reference to the solution according to any one of the sixth aspect, the seventh aspect, and the like, in a possible implementation, the request information includes at least one of the following: the identifier of each of the at least one model, or the model information of each of the at least one model.

According to an eighth aspect, a method for managing artificial intelligence is provided, and includes: receiving a first model configuration message and first radio resource control configuration information from a network device, where the first model configuration information is for activating a first model, and the first radio resource control configuration information is for configuring a first radio resource control configuration; and when the first model configuration information conflicts with the first radio resource control configuration information, determining, based on a priority of the first model configuration information and a priority of the first radio resource control configuration information, to ignore the first model configuration information or the first radio resource control configuration information.

The solution according to the eighth aspect may be executed by a terminal device, may be executed by a module or a chip configured to execute a function of the terminal device, or the like. This is not limited. For ease of description, the terminal device is used as an example for description in embodiments of this application.

According to the foregoing solution, the terminal device may determine, based on the priority of the first model configuration information and the priority of the first radio resource control configuration information, to ignore the first model configuration information or the first radio resource control configuration information. In this way, a problem of the conflict between the first model configuration information and the first radio resource control configuration information can be resolved.

In a possible implementation, the determining, based on the priority of the first model configuration information and the priority of the first radio resource control configuration information, to ignore the first model configuration information or the first radio resource control configuration information includes: determining, based on a priority of signaling for carrying the first model configuration information and a priority of signaling for carrying the first radio resource control configuration information, to ignore the first model configuration information or the first radio resource control information.

In this way, the terminal device may process the problem of the conflict between the first model configuration information and the first radio resource control configuration information based on the priority of the signaling for carrying the first model configuration information and the priority of the signaling for carrying the first radio resource control configuration information.

In a possible implementation, when the priority of the signaling for carrying the first model configuration information is higher than the priority of the signaling for carrying the first radio resource control configuration information, the method includes: determining to ignore the first radio resource control configuration information.

In a possible implementation, when the priority of the signaling for carrying the first radio resource control configuration information is higher than the priority of the signaling for carrying the first model configuration information, the method includes: determining to ignore the first model configuration information.

According to a ninth aspect, a communication apparatus is provided. The communication apparatus may be a terminal device, or may be an apparatus (for example, a chip (also referred to as a chip system) or a circuit) in the terminal device, or an apparatus that can be used in matching with the terminal device.

In a possible implementation, the communication apparatus includes modules or units that are in one-to-one correspondence with the methods/operations/steps/actions according to any one of the implementations of the first aspect. The module or the unit may be a hardware circuit, may be software, or may be implemented by a hardware circuit in combination with software.

According to a tenth aspect, a communication apparatus is provided. The communication apparatus may be a network device, or may be an apparatus (for example, a chip (also referred to as a chip system) or a circuit) in the network device, or an apparatus that can be used in matching with the terminal device.

In a possible implementation, the communication apparatus may include modules or units that are in one-to-one correspondence with the methods/operations/steps/actions according to any one of the implementations of the second aspect. The module or the unit may be a hardware circuit, may be software, or may be implemented by a hardware circuit in combination with software.

According to an eleventh aspect, a communication apparatus is provided. The communication apparatus may be a network device, an apparatus (for example, a chip (also referred to as a chip system) or a circuit) in the network device, or an apparatus that can be used in matching with the terminal device.

In a possible implementation, the communication apparatus may include modules or units that are in one-to-one correspondence with the methods/operations/steps/actions according to any one of the implementations of the third aspect. The module or the unit may be a hardware circuit, may be software, or may be implemented by a hardware circuit in combination with software.

According to a twelfth aspect, a communication apparatus is provided. The communication apparatus may be a terminal device, or may be an apparatus (for example, a chip (also referred to as a chip system) or a circuit) in the terminal device, or an apparatus that can be used in matching with the terminal device.

In a possible implementation, the communication apparatus includes modules or units that are in one-to-one correspondence with the methods/operations/steps/actions according to any one of the implementations of the fourth aspect. The module or the unit may be a hardware circuit, may be software, or may be implemented by a hardware circuit in combination with software.

According to a thirteenth aspect, a communication apparatus is provided. The communication apparatus may be a network device, or may be an apparatus (for example, a chip (also referred to as a chip system) or a circuit) in the network device, or an apparatus that can be used in matching with the network device.

In a possible implementation, the communication apparatus may include modules or units that are in one-to-one correspondence with the methods/operations/steps/actions according to the fifth aspect. The module or the unit may be a hardware circuit, may be software, or may be implemented by a hardware circuit in combination with software.

According to a fourteenth aspect, a communication apparatus is provided. The communication apparatus may be a terminal device, or may be an apparatus (for example, a chip (also referred to as a chip system) or a circuit) in the terminal device, or an apparatus that can be used in matching with the terminal device.

In a possible implementation, the communication apparatus may include modules or units that are in one-to-one correspondence with the methods/operations/steps/actions according to the sixth aspect. The module or the unit may be a hardware circuit, may be software, or may be implemented by a hardware circuit in combination with software.

According to a fifteenth aspect, a communication apparatus is provided. The communication apparatus may be a network device, or may be an apparatus (for example, a chip (also referred to as a chip system) or a circuit) in the network device, or an apparatus that can be used in matching with the network device.

In a possible implementation, the communication apparatus may include modules or units that are in one-to-one correspondence with the methods/operations/steps/actions according to the seventh aspect. The module or the unit may be a hardware circuit, may be software, or may be implemented by a hardware circuit in combination with software.

According to a sixteenth aspect, a communication apparatus is provided. The communication apparatus may be a terminal device, or may be an apparatus (for example, a chip (also referred to as a chip system) or a circuit) in the terminal device, or an apparatus that can be used in matching with the terminal device.

In a possible implementation, the communication apparatus may include modules or units that are in one-to-one correspondence with the methods/operations/steps/actions according to the eighth aspect. The module or the unit may be a hardware circuit, may be software, or may be implemented by a hardware circuit in combination with software.

According to a seventeenth aspect, a communication apparatus is provided, and includes a processor. The processor is configured to: by executing a computer program or instructions, or through a logic circuit, cause the communication apparatus to perform the method according to any one of the first aspect and the possible implementations of the first aspect; cause the communication apparatus to perform the method according to any one of the second aspect and the possible implementations of the second aspect; cause the communication apparatus to perform the method according to any one of the third aspect and the possible implementations of the third aspect; cause the communication apparatus to perform the method according to any one of the fourth aspect and the possible implementations of the fourth aspect; cause the communication apparatus to perform the method according to any one of the fifth aspect and the possible implementations of the fifth aspect; cause the communication apparatus to perform the method according to any one of the sixth aspect and the possible implementations of the sixth aspect; cause the communication apparatus to perform the method according to any one of the seventh aspect and the possible implementations of the seventh aspect; or cause the communication apparatus to perform the method according to any one of the eighth aspect and the possible implementations of the eighth aspect.

In a possible implementation, the communication apparatus further includes a memory, configured to store the computer program or the instructions.

In a possible implementation, the communication apparatus further includes a communication interface, configured to input and/or output a signal.

According to an eighteenth aspect, a communication apparatus is provided, and includes a logic circuit and an input/output interface. The input/output interface is configured to input and/or output a signal. The logic circuit is configured to perform the method according to any one of the first aspect and the possible implementations of the first aspect; the logic circuit is configured to perform the method according to any one of the second aspect and the possible implementations of the second aspect; the logic circuit is configured to perform the method according to any one of the third aspect and the possible implementations of the third aspect; the logic circuit is configured to perform the method according to any one of the fourth aspect and the possible implementations of the fourth aspect; the logic circuit is configured to perform the method according to any one of the fifth aspect and the possible implementations of the fifth aspect; the logic circuit is configured to perform the method according to any one of the sixth aspect and the possible implementations of the sixth aspect; the logic circuit is configured to perform the method according to any one of the seventh aspect and the possible implementations of the seventh aspect; or the logic circuit is configured to perform the method according to any one of the eighth aspect and the possible implementations of the eighth aspect.

According to a nineteenth aspect, a computer-readable storage medium is provided. The computer-readable storage medium stores a computer program or instructions. When the computer program or the instructions are run on a computer, the method according to any one of the first aspect and the possible implementations of the first aspect is performed; the method according to any one of the second aspect and the possible implementations of the second aspect is performed; the method according to any one of the third aspect and the possible implementations of the third aspect is performed; the method according to any one of the fourth aspect and the possible implementations of the fourth aspect is performed; the method according to any one of the fifth aspect and the possible implementations of the fifth aspect is performed; the method according to any one of the sixth aspect and the possible implementations of the sixth aspect is performed; the method according to any one of the seventh aspect and the possible implementations of the seventh aspect is performed; or the method according to any one of the eighth aspect and the possible implementations of the eighth aspect is performed.

According to a twentieth aspect, a computer program product is provided, and includes instructions. When the instructions are run on a computer, the method according to any one of the first aspect and the possible implementations of the first aspect is performed; the method according to any one of the second aspect and the possible implementations of the second aspect is performed; the method according to any one of the third aspect and the possible implementations of the third aspect is performed; the method according to any one of the fourth aspect and the possible implementations of the fourth aspect is performed; the method according to any one of the fifth aspect and the possible implementations of the fifth aspect is performed; the method according to any one of the sixth aspect and the possible implementations of the sixth aspect is performed; the method according to any one of the seventh aspect and the possible implementations of the seventh aspect is performed; or the method according to any one of the eighth aspect and the possible implementations of the eighth aspect is performed.

Descriptions of beneficial effects of the ninth aspect to the twentieth aspect may correspond to descriptions of beneficial effects of the first aspect to the eighth aspect.

### BRIEF DESCRIPTION OF DRAWINGS

FIG. 1 is a diagram of an application framework 100 in a communication system according to an embodiment of this application;
FIG. 2 is a diagram of an application framework 200 in a communication system according to an embodiment of this application;
FIG. 3 is a diagram of a communication system 300 to which an embodiment of this application is applicable;
FIG. 4 is a diagram of a communication system 400 to which an embodiment of this application is applicable;
FIG. 5 is a schematic interaction flowchart of a method 500 for managing artificial intelligence according to an embodiment of this application;
FIG. 6 is a schematic interaction flowchart of a method 600 for managing artificial intelligence according to an embodiment of this application;
FIG. 7 is a schematic interaction flowchart of a method 700 for managing artificial intelligence according to an embodiment of this application;
FIG. 8 is a schematic interaction flowchart of a method 800 for managing artificial intelligence according to an embodiment of this application;
FIG. 9 is a schematic interaction flowchart of a method 900 for managing artificial intelligence according to an embodiment of this application;
FIG. 10 is a block diagram of a communication apparatus 1000 according to an embodiment of this application; and
FIG. 11 is a block diagram of a communication apparatus 1100 according to an embodiment of this application.

### DESCRIPTION OF EMBODIMENTS

For ease of understanding embodiments of this application, the following points are first described.
1. In this application, unless otherwise specified, "a plurality of" means two or more.
2. In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
3. Various numbers in this application are merely used for differentiation for ease of description, but are not intended to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other term numerals (if existent) are used for distinguishing between similar objects, but do not necessarily indicate a specific order or sequence. Data used in such a way is interchangeable in appropriate circumstances, so that embodiments described herein can be implemented in other orders than the order illustrated or described herein.
   In addition, any embodiment or design solution described as an "example" or "for example" in this application should not be explained as being more preferred or having more advantages than another embodiment or design solution. Exactly, use of the terms such as "example" or "for example" is intended to present a related concept in a specific manner for ease of understanding.
4. The terms "include", "have", and variants thereof are intended to cover a non-exclusive inclusion. For example, a process, a method, a system, a product, or a device that includes a series of steps or units is not necessarily limited to those expressly listed steps or units, but may include other steps or units not expressly listed or inherent to such a process, method, product, or device.
5. In this application, "indicate" may be understood as "enable", and "enable" may include "directly enable" and "indirectly enable". When a piece of information is described to enable A, the information may directly enable A or indirectly enable A, but it does not mean that the information definitely carries A.
   Information enabled by information is referred to as to-be-enabled information. In a specific implementation process, the to-be-enabled information may be enabled in many manners, for example but not limited to, directly enabling the to-be-enabled information, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled by using a pre-agreed (for example, specified in a protocol) sequence of all information, to reduce enabling overheads to some extent. In addition, a common part of all the information may be identified and enabled in a unified manner, to reduce enabling overheads caused by enabling the same information separately.
6. In this application, "preconfigure" may include predefine, for example, define in a protocol. The "predefine" may be implemented by prestoring, in a device (for example, including network elements), corresponding code, a corresponding table, or other related information that may be used for indication. A specific implementation thereof is not limited in this application.
7. "Storage" or "store" in this application may mean "being stored" in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited.
8. A "protocol" in this application may be a standard protocol in the communication field, for example, may include a 4th generation (4th generation, 4G) network protocol, a 5th generation (5th generation, 5G) network protocol, a new radio (new radio, NR) protocol, a 5.5G network protocol, a 6th generation (6th generation, 6G) network protocol, and related protocols used in future communication systems. This is not limited in this application.
9. Arrows or blocks shown by dashed lines in diagrams of the accompanying drawings in this specification of this application indicate optional steps or optional modules.
10. In this application, unless otherwise specified, "/" indicates an "or" relationship between associated objects. For example, A/B may indicate A or B. "And/or" in this application describes only an association relationship for describing associated objects and indicates that three relationships may exist. For example, A and/or B may indicate the following three cases: Only A exists, both A and B exist, and only B exists, where A and B may be singular or plural.

First, a communication system to which an embodiment of this application is applicable is described.

Technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a 6th generation (6th generation, 6G) mobile communication system, or a system integrating a plurality of systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A network element in a communication system may send a signal to another network element or receive a signal from another network element. The signal may include information, signaling, data, or the like. The network element may alternatively be replaced with an entity, a network entity, a device, a communication device, a communication module, a node, a communication node, or the like. In embodiments of this application, the network element is used as an example for description. For example, the communication system may include at least one terminal device and at least one network device. The network device may send a downlink signal to the terminal device, and/or the terminal device may send an uplink signal to the network device. It may be understood that, the terminal device in embodiments of this application may be replaced with a first network element, the network device may be replaced with a second network element, and the terminal device and the network device perform a corresponding communication method in embodiments of this application.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice or data, for example, a handheld device or a vehicle-mounted device with a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile communication network (public land mobile network, PLMN), or the like. This is not limited in embodiments of this application.

By way of an example but not a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device may be a terminal device, or may be an apparatus that can support the terminal device in implementing the function, for example, a chip system, where the apparatus may be installed in the terminal device or used in matching with the terminal device. In embodiments of this application, the chip system may include a chip, or may include a chip and another discrete component. In embodiments of this application, an example in which the apparatus configured to implement the function of the terminal device is the terminal device is merely used for description, and constitutes no limitation on the solutions in embodiments of this application.

In embodiments of this application, the network device may be a device configured to communicate with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover any of the following names in a broad sense, or may be replaced with the following names: for example, a NodeB (NodeB), an evolved NodeB (evolved NodeB, eNB), a next generation NodeB (next generation NodeB, gNB), a relay station, an access point, a transmission point (transmitting and receiving point, TRP), a transmission point (transmission point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a CU-control plane (a central unit-control plane (central unit-control plane, CU-CP)) node, a CU-user plane (a central unit-user plane (central unit-user plane, CU-UP)) node, and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes separately implement a part of functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces correspond to DUs and RUs with different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, by comparison with the CPRI, a part of downlink and/or uplink baseband functions, for example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, different manners of splitting the DU and the RU correspond to different categories (categories, Cats) of eCPRIs, for example, eCPRI Cats A, B, C, D, E, and F.

The eCPRI Cat A is used as an example. For downlink transmission, layer mapping is used as a split. The DU is configured to implement layer mapping and one or more previous functions (to be specific, one or more of coding, rate matching, scrambling, modulation, and layer mapping), and another function (for example, one or more of RE mapping, BF, or IFFT/CP) after the layer mapping is removed to the RU for implementation. For uplink transmission, RE demapping is used as a split. The DU is configured to implement demapping and one or more previous functions (to be specific, decoding, rate de-matching, descrambling, demodulation, inverse discrete Fourier transform (inverse discrete Fourier transform, IDFT), channel equalization, and RE demapping), and another function (for example, one or more of digital BF or fast Fourier transform (FFT)/CP removal) after the demapping is moved to the RU for implementation. It may be understood that, for function descriptions of DUs and RUs corresponding to various categories of eCPRIs, refer to an eCPRI protocol. Details are not described herein.

In a possible design, a processing unit configured to implement a baseband function in the BBU is referred to as a baseband high (baseband high, BBH) unit, and a processing unit configured to implement a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one unit of the CU (or the CU-CP and the CU-UP), the DU, and the RU in this application may be implemented by using a software module, a hardware module, or a combination of a software module and a hardware module.

In embodiments of this application, an apparatus configured to implement a function of the network device may be a network device, or may be an apparatus that can support the network device in implementing the function, for example, a chip system, a hardware circuit, a software module, or a combination of a hardware circuit and a software module, where the apparatus may be installed in the network device or used in matching with the network device. In embodiments of this application, an example in which the apparatus configured to implement the function of the network device is the network device is merely used for description, and constitutes no limitation on the solutions in embodiments of this application.

The network device and/or the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiments of this application. In addition, the terminal device and the network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In a wireless communication network, for example, in a mobile communication network, services supported by the network are increasingly diversified, and therefore requirements that need to be satisfied are increasingly diversified. For example, the network needs to be capable of supporting an ultra-high rate, an ultra-low latency, and/or massive connections. This feature makes network planning, network configuration, and/or resource scheduling increasingly complex. In addition, because the network has increasingly powerful functions, for example, supports an increasingly high spectrum and supports new technologies such as a higher-order multiple-input multiple-output (multiple-input multiple-output, MIMO), beamforming, and/or beam management, network energy saving becomes a hot research topic. These new requirements, scenarios, and features cause unprecedented challenges to network planning, operation and maintenance, and efficient operation. To address the challenges, an artificial intelligence technology may be introduced into the wireless communication network to implement network intelligence.

To support the AI technology in a wireless network, an AI node may be further introduced into the network.

Optionally, the AI node may be deployed at one or more of the following positions in the communication system: an access network device, a terminal device, a core network device, or the like. Alternatively, the AI node may be independently deployed, for example, deployed at a position other than any one of the foregoing devices, for example, a host or a cloud server in an over the top (over the top, OTT) system. The AI node may communicate with another device in the communication system. The another device may be, for example, one or more of the following: a network device, a terminal device, a network element of a core network, or the like.

It may be understood that, a quantity of AI nodes is not limited in embodiments of this application. For example, when there are a plurality of AI nodes, the plurality of AI nodes may be obtained through division based on functions. For example, different AI nodes are responsible for different functions.

It may be further understood that, the AI nodes may be independent devices, may be integrated into a same device to implement different functions, may be network elements in a hardware device, may be software functions running on dedicated hardware, or may be virtualized functions instantiated on a platform (for example, a cloud platform). A specific form of the AI node is not limited in this application. The AI node may be an AI network element or an AI module.

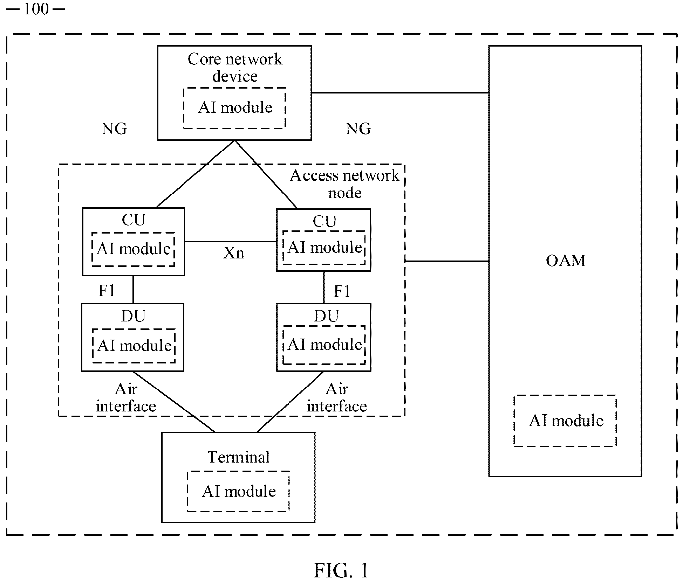

FIG. 1 is a diagram of an application framework 100 in a communication system according to an embodiment of this application. As shown in FIG. 1, network elements in the communication system are connected through an interface (for example, NG or Xn) or an air interface. One or more AI modules (for clarity, FIG. 1 shows only one AI module) are disposed in one or more of these network element nodes, such as a core network device, an access network node (RAN node), a terminal, or operations, administration, and maintenance (operations, administration, and maintenance, OAM). The access network node may be used as an independent RAN node, or may include a plurality of RAN nodes, for example, include a CU and a DU. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the Al module is configured based on different parameters, and the AI module may implement different functions. The model of the AI module may be configured based on one or more of the following parameters: a structure parameter (for example, at least one of a quantity of neural network layers, a neural network width, a connection relationship between layers, a weight of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One model may obtain one output through inference, where the output includes one or more parameters. Learning processes, training processes, or inference processes of different models may be deployed on different nodes or devices, or may be deployed on a same node or device.

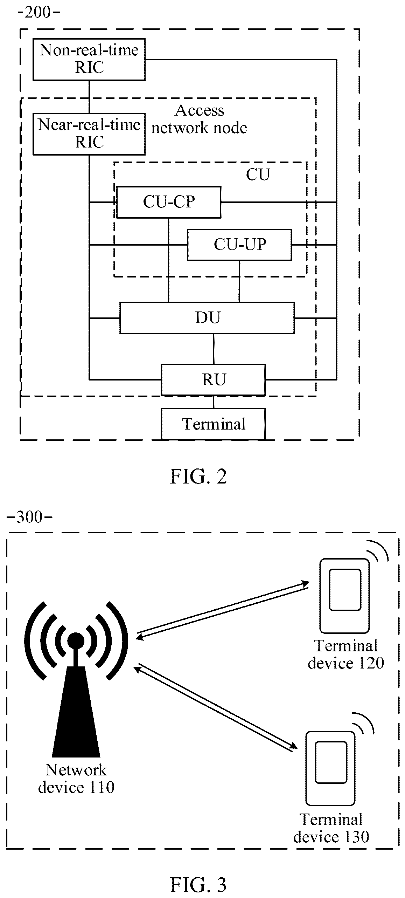

FIG. 2 is a diagram of an application framework 200 in a communication system according to an embodiment of this application. As shown in FIG. 2, the communication system includes a RAN intelligent controller (RAN intelligent controller, RIC). For example, the RIC may be AI modules 117 and 118 shown in FIG. 1, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, latency-insensitive data. A latency of the data may be several seconds. A real-time RIC mainly processes near-real-time information, for example, latency-sensitive data. A latency of the data is tens of milliseconds.

The near-real-time RIC is configured to perform model training and inference, for example, is configured to train an AI model and perform inference by using the AI model. The near-real-time RIC may obtain network side information and/or terminal side information from a RAN node (for example, a CU, a CU-CP, a CU-UP, a DU, and/or an RU) and/or a terminal. The information may be used as training data or inference data. Optionally, the near-real-time RIC may deliver an inference result to the RAN node and/or the terminal. Optionally, the CU and the DU may exchange an inference result, and/or the DU and the RU may exchange an inference result. For example, the near-real-time RIC delivers an inference result to the DU, and the DU sends the inference result to the RU.

The non-real-time RIC is also configured to perform model training and inference, for example, is configured to train an AI model and perform inference by using the model. The non-real-time RIC may obtain network side information and/or terminal side information from the RAN node (for example, the CU, the CU-CP, the CU-UP, the DU, and/or the RU) and/or the terminal. The information may be used as training data or inference data, and an inference result may be delivered to the RAN node and/or the terminal. Optionally, the CU and the DU may exchange an inference result, and/or the DU and the RU may exchange an inference result. For example, the non-real-time RIC delivers an inference result to the DU, and the DU sends the inference result to the RU.

The near-real-time RIC and the non-real-time RIC each may alternatively be independently disposed as a network element. Optionally, the near-real-time RIC and the non-real-time RIC may alternatively be used as a part of another device. For example, the near-real-time RIC is disposed on the RAN node (for example, the CU or the DU), and the non-real-time RIC is disposed on OAM, a cloud server, a core network device, or another network device.

FIG. 3 is a diagram of a communication system 300 to which an embodiment of this application is applicable. As shown in FIG. 3, the communication system 300 may include at least one network device, for example, a network device 110. The communication system 100 may further include at least one terminal device, for example, a terminal device 120 and a terminal device 130. The network device 110 may communicate with the terminal device (for example, the terminal device 120 and the terminal device 130) through a radio link. Communication devices, for example, the network device 110 and the terminal device 120, in the communication system may communicate with each other by using a multiple-antenna technology.

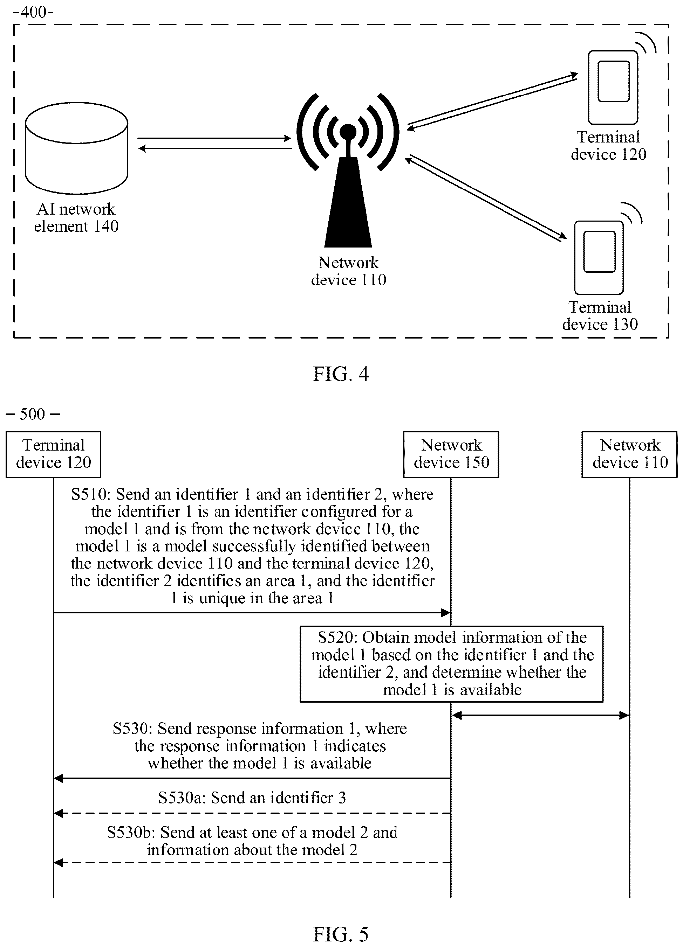

FIG. 4 is a diagram of a communication system 400 to which an embodiment of this application is applicable. Compared with the communication system 300, the communication system 400 further includes an AI network element 140. The AI network element 140 is configured to perform an AI-related operation, for example, constructing a training dataset or training an AI model.

In a possible implementation, the network device 110 may send data related to training of the AI model to the AI network element 140, and the AI network element 140 constructs the training dataset and trains the AI model. For example, the data related to training of the AI model may include data reported by the terminal device. The AI network element 140 may send a result of an operation related to the AI model to the network device 110, and the network device 110 forwards the result of the operation related to the AI model to the terminal device. For example, the result of the operation related to the AI model may include at least one of the following: a trained AI model, an evaluation result or a test result for the model, and the like. For example, a part of the trained AI model may be deployed on the network device 110, and the other part is deployed on the terminal device. Alternatively, the trained AI model may be deployed on the network device 110. Alternatively, the trained AI model may be deployed on the terminal device.

It should be understood that, in FIG. 4, that the AI network element 140 is directly connected to the network device 110 is used merely as an example for description. In another scenario, the AI network element 140 may alternatively be connected to the terminal device. Alternatively, the AI network element 140 may be connected to both the network device 110 and the terminal device. Alternatively, the AI network element 140 may be connected to the network device 110 via a third-party network element. A connection relationship between the AI network element and another network element is not limited in embodiments of this application.

The AI network element 140 may alternatively be disposed on a network device and/or a terminal device as a module, for example, disposed on the network device 110 or the terminal device shown in FIG. 3.

It should be noted that, FIG. 3 and FIG. 4 are merely simplified diagrams of examples for ease of understanding. For example, the communication system may further include another device, for example, may further include a wireless relay device and/or a wireless backhaul device, which are/is not shown in FIG. 3 and FIG. 4. In actual application, the communication system may include a plurality of network devices (for example, the network device 110 and a network device 150 (not shown in FIG. 3)), or may include a plurality of terminal devices. Quantities of network devices and terminal devices included in the communication system are not limited in embodiments of this application.

Then, a part of technical concepts in this application are briefly described.

AI model: an algorithm or a computer program that can implement an AI function. The AI model represents a mapping relationship between an input and an output of the model. A type of the AI model may be a neural network, a linear regression model, a decision tree model, a support vector machine (support vector machine, SVM), a Bayesian network, a Q-learning model, or another machine learning (machine learning, ML) model.

Two-side model: may also be referred to as a bilateral model, a cooperative model, a dual model, a two-side (two-side) model, or the like. The two-side model is a model including a plurality of submodels. The plurality of submodels included in the model need to match each other. The plurality of submodels may be deployed on different nodes.

The AI model in embodiments of this application may be a two-side model or a single-side model, and may be deployed on a terminal device and/or a network device.

Model application: uses a trained model to resolve a practical problem.

AI function: does not specifically indicate a specific AI model, but indicates a type of AI model having a same function. For example, the AI function may be channel state information (channel state information, CSI) feedback, CSI prediction, beam prediction, positioning, channel estimation, and the like. In other words, the AI function may correspond to a plurality of AI models.

It may be understood that, the AI model or the AI function may be implemented by using a hardware circuit, software, or a combination of software and hardware. This is not limited. A non-limitative example of the software includes program code, a program, a subprogram, instructions, an instruction set, code, a code segment, a software module, an application program, a software application program, or the like.

AI model identification: a process or method that makes a terminal device and a network device reach a consensus on an identified AI model. Generally, the terminal device 120 needs to register an AI model with the network device 110. To be specific, the terminal device 120 notifies the network device 110 that the terminal device 120 has an AI model, and notifies the network device 110 of information such as a function, an application scenario, and a corresponding parameter configuration of the AI model. The network device 110 may configure a model identifier for the AI model. In this way, the terminal device 120 and the network device 110 have a consistent perception of the AI model indicated by the model identifier (which may be referred to as successful identification). Alternatively, the network device 110 sends, to the terminal device 120, an AI model and information such as an identifier indicating the AI model, and a function, an application scenario, and a corresponding parameter configuration of the AI model. In a subsequent AI model management process, the terminal device 120 and the network device 110 may indicate, by using a model identifier, an AI model corresponding to the model identifier.

AI function identification: a process or method that makes a terminal device and a network device reach a consensus on an identified AI function. Generally, the terminal device 120 needs to report, to the network device 110, information such as an AI function supported by the terminal device 120 and an application scenario and a corresponding configuration of the AI function. The network device 110 may further configure a function identifier for the AI function, or identify the AI function by using the information such as the application scenario and/or the corresponding configuration of the AI function. In this way, the terminal device 120 and the network device 110 have a consistent perception of the AI function indicated by the function identifier (which may be referred to as successful identification). In a subsequent AI function management process, the terminal device 120 and the network device 110 may indicate, by using a function identifier, an AI function corresponding to the function identifier.

It should be noted that, in embodiments of this application, an indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be noted that, in embodiments of this application, that information C is for determining information D includes: The information D is determined based on only the information C, and the information D is determined based on the information C and other information. In addition, that the information C is for determining the information D may further include an indirect determining case. For example, the information D is determined based on information E, and the information E is determined based on the information C.

In addition, that "a network element A (which may be a device A) sends information A to a network element B (which may be a device B)" in embodiments of this application may be understood as that a destination end of the information A or an intermediate network element in a transmission path to the destination end is the network element B, and may include directly or indirectly sending the information to the network element B. That "the network element B receives the information A from the network element A" may be understood as that a source end of the information A or an intermediate network element in a transmission path from the source end is the network element A, and may include directly or indirectly receiving the information from the network element A. Information may undergo necessary processing, for example, a format change, between the source end for sending the information and the destination end. However, the destination end may understand valid information from the source end. Similar descriptions in this application may be understood similarly. Details are not described herein.

Currently, an identification procedure (an AI model identification procedure and an AI function identification procedure are not distinguished, and are collectively referred to as the identification procedure) between a terminal device and a network device causes high identification overheads. For example, the terminal device and a network device corresponding to a cell 1 perform an identification procedure of a model 1 (an AI model and an AI function are not distinguished, and are collectively referred to as the model 1), and the model 1 is a successfully identified model. When the terminal device is handed over from the cell 1 to a cell 2, the terminal device and a network device corresponding to the cell 2 still need to perform a complete identification procedure of the model 1 again, which increases identification overheads. For another example, after the terminal device performs update processing on the successfully identified model 1, the terminal device and the network device corresponding to the cell 1 still need to perform a complete identification procedure of the updated model 1, which increases identification overheads. For another example, the terminal device and the network device corresponding to the cell 1 perform an identification procedure of a plurality of models, each of the plurality of models is a successfully identified model, and the network device needs to configure an identifier for each of the plurality of models. When the terminal device no longer uses a part of the plurality of models subsequently, if the terminal device and the network device corresponding to the cell 1 continue to perform an identification procedure of another model, a bit length of a model identifier becomes longer, which also increases identification overheads.

In view of the foregoing problem, this application provides a method for managing artificial intelligence and a communication apparatus, to effectively reduce identification overheads between a terminal device and a network device.

It should be uniformly noted that, embodiments provided in this application may be used to resolve the foregoing technical problem. However, for ease of description and understanding, the following separately describes embodiments with reference to different scenarios.

A method for managing artificial intelligence in embodiments of this application is then described.

When a terminal device 120 is located in a cell 1 (for example, a second cell) (the cell 1 is a source cell of the terminal device 120), the terminal device 120 and a network device 110 corresponding to the cell 1 perform an identification procedure of a model 1, and the model 1 is a successfully identified model. When the terminal device is handed over to a cell 2 (for example, a first cell) (the cell 2 is a cell on which the terminal device 120 currently camps), the terminal device 120 and a network device 150 corresponding to the cell 2 may perform, by using a method shown in FIG. 5, an identification procedure of the model 1. This can effectively reduce identification overheads between the terminal device 120 and the network device 150. For details, refer to FIG. 5.

FIG. 5 is a schematic interaction flowchart of a method 500 for managing artificial intelligence according to an embodiment of this application. The method 500 may be performed by a terminal device 120, a network device 110, and a network device 150, may be performed by modules and/or components (for example, chips or integrated circuits) that have corresponding functions and that are installed in the terminal device 120, the network device 110, and the network device 150, or may be completed by an AI entity or an AI module, for example, a RIC. This is not limited. The following uses the terminal device 120, the network device 110, and the network device 150 as an example for description. The method 200 includes the following steps.

S510: The terminal device 120 sends an identifier 1 (for example, a first identifier) and an identifier 2 (for example, a second identifier) to the network device 150, where the identifier 1 is an identifier configured for a model 1 (for example, a first model) and is from the network device 110, the model 1 is a model successfully identified between the network device 110 and the terminal device 120, the identifier 2 identifies an area 1 (for example, a first area), and the identifier 1 is unique in the area 1. It may be understood that, in this embodiment of this application, the "area" may be replaced with a "scope" or an "application scope". The identifier 1 or the first identifier may also be replaced with a "local identifier". The identifier 2 or the second identifier may be replaced with an "area identifier".

Correspondingly, the network device 150 receives the identifier 1 and the identifier 2.

Specifically, the terminal device 120 and the network device 110 may perform an identification procedure of the model 1. For specific content of the identification procedure, refer to the foregoing descriptions of AI model identification or AI function identification. Details are not described again. After completing the identification procedure of the model 1, the network device 110 configures, for the model 1, the identifier 1 identifying the model 1.

In an example, when the model 1 is a model trained by the terminal device 120, the identification procedure of the model 1 between the terminal device 120 and the network device 110 is as follows: The terminal device 120 reports, to the network device 110, at least one of the following information: function information/feature information of the model 1, that is, a specific function to be implemented by the model 1, for example, one or more of functions used for CSI feedback, CSI prediction, beam prediction, positioning, or the like; an application scenario/condition of the model 1, that is, a specific circumstance in which the model 1 may be used, for example, one or more of indoor, outdoor, urban, suburban, and other scenarios; a radio resource control (radio resource control, RRC) configuration supported by the model 1, for example, one or more of an antenna, a bandwidth, and a beam set; or performance of the model 1, for example, one or more of a generalized cosine similarity (generalized cosine similarity, GCS), a square generalized cosine similarity (square generalized cosine similarity, SGCS), a minimum mean square error (mean square error, MSE), a normalized mean square error (normalized mean square error, NMSE), a throughput, spectral efficiency, a transmission rate, a block error rate (block error rate, BLER), a hypothetical BLER, a hybrid automatic repeat request (hybrid automatic repeat request, HARQ) acknowledgement/negative acknowledgement (HARQ ACK/NACK), a signal to interference plus noise ratio (signal to interference plus noise ratio, SINR), a reference signal received power (reference signal received power, RSRP), and the like. The foregoing information (which may further include information that is not mentioned or the like) may be collectively referred to as model information of the model 1. In other words, when the model 1 is the model trained by the terminal device 120, and the terminal device 120 and the network device 110 perform the identification procedure of the model 1, the terminal device 120 reports the model information of the model 1 to the network device 110, to help the network device 110 and the terminal device 120 have a consistent understanding of the model 1. Further, the network device 110 configures the identifier 1 for the model 1.

In another example, when the model 1 is a model trained by the network device 110, the identification procedure of the model 1 between the terminal device 120 and the network device 110 is as follows: The network device 110 delivers model information of the model 1 to the terminal device 120, and delivers the model 1 to the terminal device 120. In this way, the terminal device 120 and the network device 110 may have the consistent understanding of the model 1. Further, the network device 110 configures the identifier 1 for the model 1.

That "the model 1 is the model successfully identified between the network device 110 and the terminal device 120" may be: The terminal device 120 and the network device 110 have had the consistent understanding of the model 1, which may indicate that the model 1 is the model successfully identified between the network device 110 and the terminal device 120; or may be: The network device 110 configures the identifier 1 for the model 1, which may also indicate that the model 1 is the model successfully identified between the network device 110 and the terminal device 120.

The foregoing "successfully identified model" may also be: For the terminal device 120 and the network device 110, the model 1 is available. In other words, the terminal device 120 may perform a communication task based on the model 1, for example, perform a CSI feedback task or a CSI prediction task based on the model 1. Alternatively, the model 1 may be used in a service scope (for example, a cell 1) corresponding to the network device 110.

In a possible implementation, the model 1 is at least one of an AI model and an AI function. In other words, the model 1 may be the AI model, may be the AI function, or may be the AI function and the AI model. Correspondingly, in a possible implementation, the identifier 1 includes at least one of a model identifier and a function identifier. In other words, the identifier 1 includes the model identifier, the identifier 1 includes the function identifier, or the identifier 1 includes both the model identifier (indicating an AI model, so that the terminal device and the network device can determine the same AI model based on the model identifier) and the function identifier (indicating an AI function, so that the terminal device and the network device can determine the same AI function based on the model identifier). When the identifier 1 includes the model identifier, the model 1 is the AI model. When the identifier 1 includes the function identifier, the model 1 is the AI function. When the identifier 1 includes the model identifier and the function identifier, the model 1 is both the AI model and the AI function.

In S510, the identifier 2 may be from the network device 110, or may be determined by the terminal device 120. When the identifier 2 is from the network device 110, the network device 110 may send the identifier 2 to the terminal device 120. The identifier 2 identifies the area 1 in which the network device 110 is located, to help the network device 150 determine a position of the network device 110 that configures the identifier 1 for the model 1. For example, the network device 110 may send the identifier 2 to a terminal device in the area 1 by using broadcast information. When the identifier 2 is determined by the terminal device 120, the terminal device 120 may determine the identifier 2 based on the following parameter. For example, the terminal device 120 may determine a cell identifier of the terminal device 120 by measuring a synchronization signal, for example, a primary synchronization signal and a secondary synchronization signal, to determine the identifier 2.

In a possible implementation, a type of the identifier 2 includes at least one of the following: a cell identifier, a cell group identifier, a tracking area identifier, a service area identifier, or a timing advance group identifier.

When the type of the identifier 2 is the cell identifier, the identifier 2 may be a cell global identifier (cell global identifier, CGI), a base station identifier (gNB ID), or a physical cell identifier (physical cell identifier, PCI). When the type of the identifier 2 is the tracking area identifier, the identifier 2 may be a tracking area identifier (tracking area identifier, TAI) or a tracking area code (tracking area code, TAC). When the type of the identifier 2 is the service area identifier, the identifier 2 may be a service area identifier, and the identifier 2 may be a service area identifier (service area identifier, SAI). When the type of the identifier 2 is the timing advance group identifier, the identifier 2 may be a timing advance group identifier (timing advance group identifier, TAGI). The cell group identifier identifies a cell group including at least two cells. In addition, a combination manner of types of the identifier 2 is not limited in this application. For example, the type of the identifier 2 may include both the tracking area identifier and the service area identifier. An association relationship exists between a type of the area 1 and the type of the identifier 2, or the type of the area 1 is the same as the type of the identifier 2.

For example, when the type of the identifier 2 is the cell identifier, the area 1 includes one or more cells; when the type of the identifier 2 is the cell group identifier, the area 1 includes one or more cell groups; when the type of the identifier 2 is the tracking area identifier, the area 1 includes one or more tracking areas; when the type of the identifier 2 is the service area identifier, the area 1 includes one or more service areas; when the type of the identifier 2 is the timing advance group identifier, the area 1 includes one or more timing advance groups; or when the type of the identifier 2 is the tracking area identifier and the service area identifier, the area 1 includes one or more tracking areas and one or more service areas.

In a possible implementation, the area 1 includes a plurality of network devices, and the plurality of network devices include the network device 110. Alternatively, the area 1 may be a valid identification area of the identifier 1, that is, the terminal device and the network device in the area 1 have a consistent understanding of the model 1 indicated by the identifier 1.

In a possible implementation, the identifier 1 is unique in the area 1. In this way, a problem of an identifier conflict can be avoided.

S520: The network device 150 obtains the model information of the model 1 based on the identifier 1 and the identifier 2, and determines whether the model 1 is available.

Specifically, the network device 150 determines the area 1 based on the identifier 2. If an area of the network device 150 does not belong to the area 1, the network device 150 may perform interaction with a network device in the area 1, to obtain the model information of the model 1. For example, the network device 150 may perform interaction with one or more network devices in the area 1, to determine the network device 110 that configures the identifier 1 for the model 1, and obtain the model information of the model 1 from the network device 110; or obtain the model information of the model 1 from a network device that is in the area 1 and that stores the information. If the network device 150 belongs to the area 1, the network device 150 may determine whether the network device 150 stores the model information of the model 1. If the network device 150 does not store the model information of the model 1, the network device 150 obtains the model information of the model 1 from another network device in the area 1.

Alternatively, in another possible implementation, regardless of whether the area of the network device 150 belongs to the area 1, the network device 150 may obtain the model information of the model 1 from a third-party device based on the identifier 1 and the identifier 2. For example, the network device 150 obtains the model information of the model 1 from the third-party device that stores the model information of the area 1.

Further, the network device 150 may determine whether the model 1 is available, that is, the network device 150 determines whether the model 1 is available in a cell 2. In an example, when the model 1 is the model trained by the terminal device 120, the network device 150 may determine whether an RRC configuration supported by the model 1 can be configured, or may determine whether a scenario corresponding to the cell 2 belongs to a scenario in which the model 1 is used. In another example, when the model 1 is a two-side model (that is, a model jointly determined by the network device 110 and the terminal device 120), the network device 150 may determine whether a network side model that can be paired with the model 1 exists.

S530: The network device 150 sends response information 1 to the terminal device 120, where the response information 1 indicates whether the model 1 is available.

Correspondingly, the terminal device 120 receives the response information 1, and determines, based on the response information 1, whether the model 1 is available. Further, the terminal device 120 determines, based on the response information 1, whether the network device 150 successfully identifies the model 1.

In conclusion, when the terminal device 120 and the network device 150 identify the successfully identified model 1 again, the terminal device 120 and the network device 150 may not exchange complete information (the model information of the model 1) identifying the model 1 again, but exchange only the identifier 1 and the identifier 2, and the network device 150 can obtain the complete information about the model 1 based on the identifier 1 and the identifier 2. The can effectively reduce identification overheads between the terminal device 120 and the network device 150.

According to the foregoing solution, an identification procedure between the terminal device and the network device can be simplified, and the identification overheads between the terminal device and the network device can be effectively reduced.

In a possible implementation, the method 500 may further include the following step.

S530a: The network device 150 sends an identifier 3 to the terminal device 120.

Correspondingly, the terminal device 120 receives the identifier 3.

Specifically, when the network device 150 determines that the model 1 is available and determines that a new identifier may be used for the model 1, the network device 150 may send, to the terminal device 120, the identifier 3 configured by the network device 150 for the model 1. In a subsequent operation, the terminal device 120 and the network device 150 may use the identifier 3 to indicate the model 1. In this way, the network device 150 may configure a new identifier for the model 1, to help the terminal device 120 and the network device 150 identify and understand the model 1.

In a possible implementation, the network device 150 may further configure an identifier 4 identifying an area 2, and the network device 150 is located in the area 2 (the area 2 may be the same as the area 1). When the terminal device 120 subsequently identifies the model 1 (to be specific, when the terminal device 120 is handed over from the cell 2 to a cell 3, the terminal device 120 and a network device corresponding to the cell 3 identify the model 1 again), the terminal device 120 may report the identifier 1 and the identifier 2 to another network device (for example, the network device corresponding to the cell 3), or may report the identifier 3 and the identifier 4. This is not limited.

In a possible implementation, when the network device 150 determines that the model 1 is available and determines that a new identifier may be used for the model 1, the response information 1 may be identifier allocation information indicating that the model 1 is available, and may be further for configuring the identifier 3. In other words, the response information 1 may include the identifier 3. When the response information 1 includes the identifier 3, the terminal device 120 may determine that the network device 150 successfully identifies the model 1, and the identifier 3 is used for the model 1.

In a possible implementation, when the network device 150 determines that the model 1 is available and the identifier 1 of the model 1 may not be changed, the response information 1 is acknowledgement information for determining that the model 1 is successfully identified (or the model 1 is available), and may further indicate that the identifier 1 can continue to be used. In a subsequent operation, the terminal device 120 and the network device 150 may continue to use the identifier 1 to indicate the model 1.

In a possible implementation, the response information 1 may include acknowledgement (acknowledgement, ACK) information or the identifier 1. When the response information 1 includes the identifier 1, the terminal device 120 determines that the network device 150 successfully identifies the model 1.

In a possible implementation, the network device 150 may alternatively activate the model 1 directly by using the identifier 1, and does not send the response information 1 to the terminal device 120.

In a possible implementation, the method 500 may further include the following step.

S530b: The network device 150 sends at least one of a model 2 and information about the model 2 to the terminal device 120.

Correspondingly, the terminal device 120 receives the at least one of the model 2 and the information about the model 2.

Specifically, when the network device 150 determines that the model 1 is unavailable, the network device 150 sends the at least one of the model 2 and the information about the model 2 to the terminal device 120. When the model 2 has been configured on the terminal device 120, the information about the model 2 may be activation information of the model 2, where the activation information is for activating the model 2. In this way, the terminal device 120 and the network device 150 can complete identification on a new model.

Specifically, when the network device 150 determines that the model 1 is unavailable, the response information 1 sent by the network device 150 to the terminal device 120 may include the at least one of the model 2 and the information about the model 2, and the at least one of the model 2 and the information about the model 2 may indicate that the network device 150 does not successfully identify the model 1 or the model 1 is unavailable.

In a possible implementation, when the network device 150 determines that the model 1 is unavailable, the network device 150 may indicate, by using the response information 1, the terminal device 120 to perform a complete identification procedure of the model 1, or the network device 150 indicates, by using the response information 1, the terminal device 120 to fall back to a non-AI mode.

In a possible implementation, the response information 1 may include information indicating the terminal device 120 to fall back to the non-AI mode, the response information 1 may include information indicating the terminal device 120 to perform the complete identification procedure, or the response information 1 includes the at least one of the model 2 and the model 2 information. In this way, the terminal device 120 may determine, based on the foregoing information, that the model 1 is unavailable.

It should be noted that, that the network device 150 determines that the model 1 is unavailable may be: The network device 150 has no RRC configuration matching the model 1; the network device 150 determines that a scenario corresponding to the cell 2 is not suitable for the application scenario or the like of the model 1; or when the model 1 is the two-side model, the network device 150 has no network side model that can match the model 1.

In the foregoing content, the terminal device 120 may report one or more groups of the identifier 1 and the identifier 2 to the network device 150, that is, the terminal device 120 performs identification on one or more models. For example, one identifier 2 and N identifiers 1 identify N models, or M (<N) identifiers 2 and N identifiers 1 identify N models. Correspondingly, the response information 1 may indicate at least one of the following content: specific available models, specific unavailable models, specific models whose identifiers 1 (that is, local identifiers) need to be replaced, an updated identifier 1 (that is, a local identifier), a model whose model information is not obtained by the network device 150, specific models that are successfully identified, specific models that are not successfully identified, and the like.

In the method 500, the identifier 1 and the identifier 2 are carried in at least one of the following messages: a random access message, for example, a message 1 (message 1, Msg1), a message 3 (message 3, Msg3), or a message A (message A, MsgA); RRC connection setup/reestablishment/reconfiguration related information, such as an RRC configuration request (RRCSetupRequest) message, an RRC configuration complete (RRCSetupComplete) message, an RRC reconfiguration complete (RRCReconfigurationComplete) message, an RRC reestablishment request message, an RRC reestablishment complete (RRCReestablishmentComplete) message; another RRC message; a physical layer message, for example, an uplink control message (uplink control information, UCI); and a MAC layer message, for example, a MAC CE. The identifier 1 and the identifier 2 may be carried in a same message or different messages.

It should be noted that, in this application, the response information 1 may only indicate whether the model 1 is available, and does not carry other information. In this application, the response information 1 may alternatively carry other information, and the other information may indicate whether the model 1 is available. For example, the response information 1 includes the identifier 3, and the identifier 3 indicates that the model 1 is available. For another example, the response information 1 includes the at least one of the model 2 and the information about the model 2, and the at least one of the model 2 and the information about the model 2 indicates that the model 1 is unavailable.

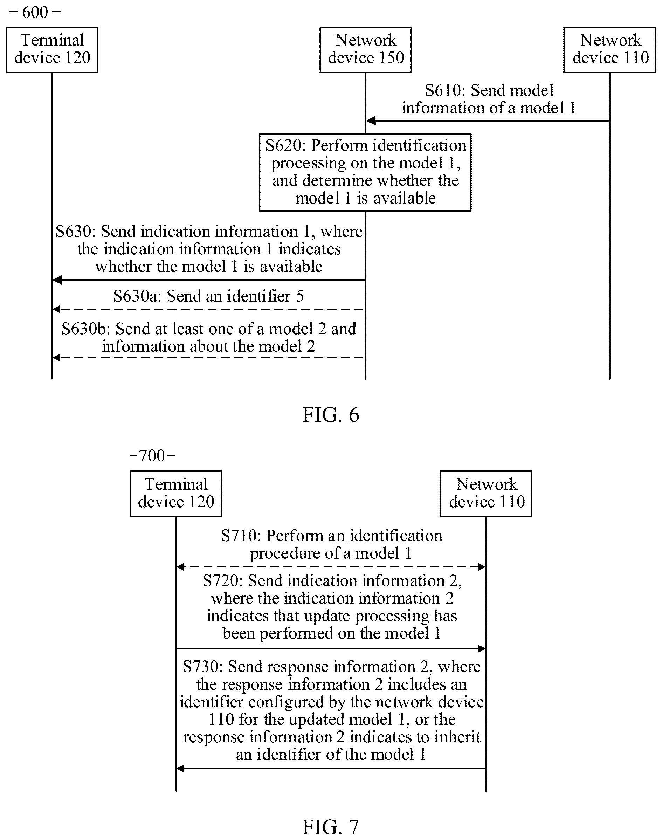

In addition, the method 500 mainly focuses on describing a solution procedure in which the terminal device initiates identification. The following describes, with reference to FIG. 6, content in which the network device initiates identification.

FIG. 6 is a schematic interaction flowchart of a method 600 for managing artificial intelligence according to an embodiment of this application. The method 600 may be performed by a terminal device 120, a network device 110, and a network device 150, may be performed by modules and/or components (for example, chips or integrated circuits) that have corresponding functions and that are installed in the terminal device 120, the network device 110, and the network device 150, or may be completed by an AI entity or an AI module, for example, a RIC. This is not limited. The following uses the terminal device 120, the network device 110, and the network device 150 as an example for description. The method 600 includes the following steps.

S610: The network device 110 sends model information of a model 1 to the network device 150.

Correspondingly, the network device 150 receives the model information of the model 1.

Specifically, when the terminal device 120 is handed over to the network device 150, when the network device 110 plans to hand over a terminal device 130 to the network device 150, or when the network device 150 requests the model information of the model 1 from the network device 110, the network device 110 sends the model information of the model 1 to the network device 150.

S620: The network device 150 performs identification processing on the model 1 based on the model information of the model 1, and determines whether the model 1 is available.

For descriptions of S620, refer to descriptions of S520. Details are not described herein again.

S630: The network device 150 sends indication information 1 to the terminal device 120, where the indication information 1 indicates whether the model 1 is available.

Correspondingly, the terminal device 120 receives the indication information 1, and determines, based on the indication information 1, whether the model 1 is available.

For descriptions of S630, refer to descriptions of S530. Details are not described herein again.

Specifically, the network device 150 may obtain the model information of the model 1 from the network device 110, and complete identification on the model 1 based on the model information of the model 1. The network device 150 may obtain the model information of the model 1 not from the terminal device 130. This can effectively reduce identification overheads between the terminal device 120 and the network device 150.

According to the foregoing solution, an identification procedure between the terminal device and the network device can be simplified, and the identification overheads between the terminal device and the network device can be effectively reduced.

In a possible implementation, the method 600 may further include the following step.

S630a: The network device 110 sends an identifier 5 to the terminal device 120.

Correspondingly, the terminal device 120 receives the identifier 5 from the network device 110. The identifier 5 identifies the model 1. For descriptions of the identifier 5, refer to the foregoing descriptions related to the identifier 1. Details are not described herein again. In this way, the network device 150 may configure an identifier for the model 1, to help the terminal device 120 and the network device 150 identify and understand the model 1.

In a possible implementation, the method 600 may further include the following step.

S630b: The network device 110 sends at least one of a model 2 and information about the model 2 to the terminal device 120.

For descriptions of S630b, refer to descriptions of S530b. Details are not described herein again. In this way, the terminal device 120 and the network device 150 can complete identification on a new model.

After the terminal device 120 performs update processing on the successfully identified model 1, the terminal device 120 and the network device 110 perform a complete identification procedure of the updated model 1 again. This increases identification overheads. Therefore, the terminal device 120 and the network device 110 may identify the updated model 1 by using a method shown in FIG. 7, to effectively reduce identification overheads between the terminal device 120 and the network device 110. For details, refer to FIG. 7.

FIG. 7 is a schematic interaction flowchart of a method 700 for managing artificial intelligence according to an embodiment of this application. The method 700 may be performed by a terminal device 120 and a network device 110, may be performed by modules and/or components (for example, chips or integrated circuits) that have corresponding functions and that are installed in the terminal device 120 and the network device 110, or may be completed by an AI entity or an AI module, for example, a RIC. This is not limited. The following uses the terminal device 120 and the network device 110 as an example for description. The method 700 includes the following steps.

Optionally, in S710, the terminal device 120 and the network device 110 perform an identification procedure of a model 1.

For descriptions of S710, refer to descriptions of S510. Details are not described herein again.

S720: The terminal device 120 sends indication information 2 to the network device 110, where the indication information 2 indicates that update processing has been performed on the model 1.

Correspondingly, the network device 110 receives the indication information 2, and determines, based on the indication information 2, that update processing has been performed on the model 1.

After the terminal device 120 performs update processing on the successfully identified model 1, that is, after a structure and/or a parameter of the model 1 change/changes, the terminal device 120 and the network device 110 re-identify the model 1. A purpose of re-identification is to cause the network device 110 to sense that update processing has been performed on the model 1. If the network device 110 does not sense that update processing has been performed on the model 1, it may be impossible to determine whether deterioration of network performance is caused by the model 1.

In a possible implementation, the indication information 2 may include any one of the following: an identifier of the model 1, information (indicating performance of the updated model 1) about the performance of the updated model 1, or information that is in model information of the model 1 and that changes due to model update. When the indication information 2 includes the identifier of the model 1, the network device 110 determines, based on the identifier of the model 1, that update processing has been performed on the model 1. When the indication information 2 includes the information about the performance of the updated model 1, the network device 110 determines, based on the information about the performance of the updated model 1, that update processing has been performed on the model 1. The information about the performance of the updated model 1 may further indicate a change of the performance of the updated model 1 compared with the model 1 before the update. The network device updates, based on the received model information of the model 1, corresponding model information of the model 1 stored in the network device. Other model information that is of the model 1 and that is not sent by the terminal device does not change by default.

S730: The network device 110 sends response information 2 to the terminal device 120, where the response information 2 includes an identifier configured by the network device 110 for the updated model 1, or the response information 2 indicates to inherit the identifier of the model 1.

Specifically, the network device 110 may reconfigure a new identifier for the model 1 on which update processing has been performed, or the network device 110 may determine to inherit the identifier of the model 1. In this way, the network device 100 may feed back, to the terminal device 120, that the network device 110 has sensed that update processing has been performed on the first model.

It may be understood that, the method shown in FIG. 7 may be combined with the method shown in FIG. 5 or FIG. 6, or may be independent of the method shown in FIG. 5 or FIG. 6.

In conclusion, the terminal device may cause, by using the foregoing technical solution, the network device to sense that update processing has been performed on a successfully identified model, to effectively reduce identification overheads between the terminal device and the network device. In addition, this can also prevent the terminal device and the network device from again performing a complete identification procedure of the model on which update processing has been performed.

It should be noted that, the method 700 is described by using interaction between the terminal device 120 and the network device 110 as an example. However, the network device 110 may alternatively be a network device 150, and behaviors of the network device 110 and the network device 150 are basically the same. For ease of description, that the terminal device 120 and the network device 150 perform an interaction procedure shown in the method 700 is not described below again.

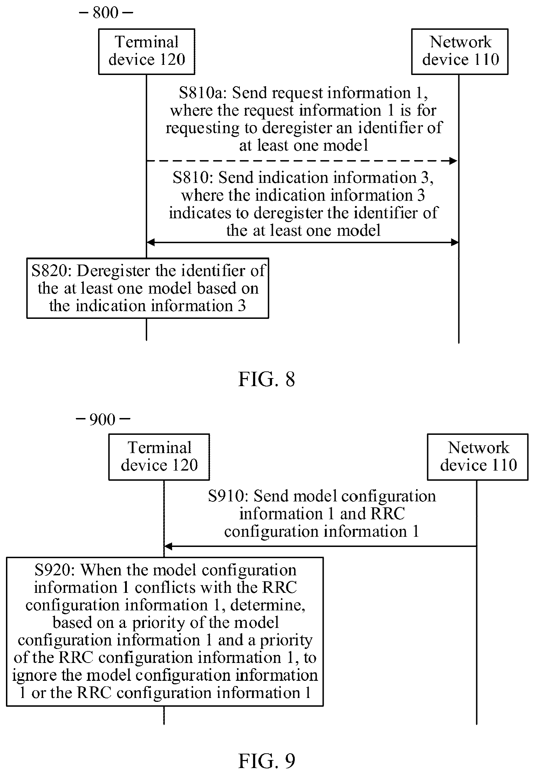

When the terminal device 120 and the network device 110 perform identification on a plurality of models, the network device 110 may configure an identifier for each successfully identified model. When the terminal device 120 no longer uses a part of successfully identified models in a subsequent use process, the part of models affect a bit length of an identifier of a model that is successfully identified subsequently, increasing the identification overheads between the terminal device and the network device. Therefore, the terminal device 120 may effectively reduce the identification overheads by using a method shown in FIG. 8. For details, refer to FIG. 8.

FIG. 8 is a schematic interaction flowchart of a method 800 for managing artificial intelligence according to an embodiment of this application. The method 800 may be performed by a terminal device 120 and a network device 110, may be performed by modules and/or components (for example, chips or integrated circuits) that have corresponding functions and that are installed in the terminal device 120 and the network device 110, or may be completed by an AI entity or an AI module, for example, a RIC. This is not limited. The following uses the terminal device 120 and the network device 110 as an example for description. The method 800 includes the following steps.

S810: The network device 110 sends indication information 3 to the terminal device 120, where the indication information 3 indicates to deregister an identifier of at least one model.

Correspondingly, the terminal device 120 receives the indication information 3.

S820: The terminal device 120 deregisters the identifier of the at least one model based on the indication information 3.

Specifically, the terminal device 120 deregisters the identifier of the at least one model based on an indication of the network device 110. In this way, a bit length of the identifier of the model can be effectively reduced, to help reduce identification overheads between the terminal device and the network device.

In a possible implementation, the indication information 3 includes an identifier of each of the at least one model, or the indication information 3 includes model information of each of the at least one model. In this way, the terminal device 120 may deregister the identifier of the at least one model based on content included in the indication information 3.

It may be understood that, the indication information 3 may take effect at a moment n+k, where a moment n is a moment at which the terminal device 120 receives the indication information 3, the moment n may be a first or last OFDM symbol, slot, subframe, or frame at which the terminal device 120 receives the indication information 3, and k is a predefined or preconfigured time offset. After the indication information 3 takes effect, the deregistered identifier of the model no longer indicates the original model corresponding to the deregistered identifier.

In a possible implementation, the method 800 may further include the following step.

S810a: The terminal device 120 sends request information 1 to the network device 110, where the request information 1 is for requesting to deregister the at least one model.

Correspondingly, the network device 110 receives the request information 1, and may determine the indication information 3 based on the request information 1. In this way, the terminal device 120 can actively propose to deregister identifiers of some models.

Specifically, the request information 1 may include the identifier of each of the at least one model, or the request information 1 may include the model information of each of the at least one model. An association relationship exists between the model information and the model identifier of the model. In this way, the network device 110 can conveniently determine identifiers of specific models that need to be deregistered.

In a possible implementation, the method 800 may further include the following step.

S820a: The terminal device 120 sends response information 2 to the network device 110, where the response information 2 indicates whether the indication information 3 is successfully received.

Correspondingly, the network device 110 receives the response information 2, and determines, based on the response information 2, whether the terminal device 120 successfully receives the indication information 3. In this way, the network device 110 can determine whether the terminal device 120 successfully receives the indication information 3. It should be noted that, the method 800 is described by using interaction between the terminal device 120 and the network device 110 as an example. However, the network device 110 may alternatively be a network device 150, and behaviors of the network device 110 and the network device 150 are basically the same. For ease of description, that the terminal device 120 and the network device 150 perform an interaction procedure shown in the method 800 is not described below again.

It may be understood that, the method shown in FIG. 8 may be combined with at least one of the method shown in FIG. 5 or FIG. 6 or the method shown in FIG. 7, or may be independent of at least one of the methods shown in FIG. 5 to FIG. 7.

In addition, content in FIG. 5 to FIG. 8 is about how to reduce identification overheads between a terminal device and a network device. However, after the terminal device and the network device completes model identification, a conflict between a model and an RRC configuration may exist. Specifically, each model has an RRC configuration that the model can match, for example, supporting 32 ports in terms of antenna port, 10 MHz in terms of bandwidth, and 100 bits in terms of feedback bit. Because model activation and an RRC configuration are independent of each other, an activated model may not match the RRC configuration. The terminal device 120 may cope with, by using a method shown in FIG. 9, the case in which the activated model does not match the RRC configuration. For details, refer to FIG. 9. It may be understood that, the method shown in FIG. 9 may be combined with at least one of the methods shown in FIG. 5 to FIG. 8, or may be independent of at least one of the methods shown in FIG. 5 to FIG. 8.

FIG. 9 is a schematic interaction flowchart of a method 900 for managing artificial intelligence according to an embodiment of this application. The method 900 may be performed by a terminal device 120 and a network device 110, may be performed by modules and/or components (for example, chips or integrated circuits) that have corresponding functions and that are installed in the terminal device 120 and the network device 110, or may be completed by an AI entity or an AI module, for example, a RIC. This is not limited. The following uses the terminal device 120 and the network device 110 as an example for description. The method 900 includes the following steps.

S910: The network device 110 sends model configuration information 1 and RRC configuration information 1 to the terminal device 120.

Correspondingly, the terminal device 120 receives the model configuration information 1 and the RRC configuration information 1. The model configuration information 1 is for activating a model 3, and the RRC configuration information 1 is for configuring an RRC configuration 1.

S920: When the model configuration information 1 conflicts with the RRC configuration information 1, the terminal device 120 determines, based on a priority of the model configuration information 1 and a priority of the RRC configuration information 1, to ignore the model configuration information 1 or the RRC configuration information 1.

Specifically, that the model configuration information 1 conflicts with the RRC configuration information 1 may be: The model 3 activated by using the model configuration information 1 does not match the RRC configuration 1 configured by using the RRC configuration information 1. In other words, the RRC configuration 1 cannot be applied to the model 3, or the model 3 cannot support the RRC configuration 1. When the priority of the model configuration information 1 is higher than the priority of the RRC configuration information 1, the terminal device 120 determines to ignore the RRC configuration information 1, and uses an RRC configuration 2 that matches the model 3 (the RRC configuration 2 has been configured on a side of the terminal device 120). When the priority of the RRC configuration information 1 is higher than the priority of the model configuration information 1, the terminal device 120 determines to ignore the model configuration information 1; and continues to use a previous model or a previous non-AI mode, or falls back to the non-AI mode.

In a possible implementation, a priority of signaling for carrying the model configuration information 1 is higher than a priority of signaling for carrying the RRC configuration information 1. Specifically, the terminal device 120 may perform selection based on the priority of the signaling for carrying the model configuration information 1 higher than the priority of signaling for carrying the RRC configuration information 1. For example, when the priority of the signaling for carrying the model configuration information 1 is higher than the priority of signaling for carrying the RRC configuration information 1, the terminal device 120 determines to ignore the RRC configuration information 1. In this way, the terminal device may process a problem of a conflict between first model configuration information and first radio resource control configuration information based on a priority of signaling for carrying the first model configuration information and a priority of signaling for carrying the first radio resource control configuration information.

In a possible implementation, a priority of signaling for carrying the RRC configuration information 1 is higher than a priority for carrying the model configuration information 1. Specifically, the terminal device 120 may perform selection based on the priority of the signaling for carrying the model configuration information 1 higher than the priority of signaling for carrying the RRC configuration information 1. For example, when the priority of the signaling for carrying the RRC configuration information 1 is higher than the priority of signaling for carrying the model configuration information 1, the terminal device 120 determines to ignore the model configuration information 1. In this way, the terminal device may process a problem of a conflict between first model configuration information and first radio resource control configuration information based on a priority of signaling for carrying the first model configuration information and a priority of signaling for carrying the first radio resource control configuration information.

In a possible implementation, in this application, it may be specified that a priority of later received signaling is higher than a priority of earlier received signaling. When receiving time of the RRC configuration information 1 is later than receiving time of the model configuration information 1, the terminal device 120 determines to ignore the model configuration information 1. When the receiving time of the RRC configuration information 1 is earlier than the receiving time of the model configuration information 1, the terminal device 120 determines to ignore the RRC configuration information 1.

In a possible implementation, in this application, it may alternatively be specified that a priority of earlier received signaling is higher than a priority of later received signaling. When receiving time of the RRC configuration information 1 is earlier than receiving time of the model configuration information 1, the terminal device 120 determines to ignore the model configuration information 1. When the receiving time of the RRC configuration information 1 is later than the receiving time of the model configuration information 1, the terminal device 120 determines to ignore the model configuration information 1.

The terminal device 120 may also report, to the network device 110, the case in which the model configuration information 1 conflicts with the RRC configuration information 1. In this way, the network device 110 may process the case.

According to the foregoing solution, the terminal device may determine, based on the priority of the model configuration information 1 and the priority of the RRC configuration information 1, to ignore the model configuration information or the RRC configuration information. In this way, the terminal device can resolve the problem of the conflict between the model configuration information 1 and the RRC configuration information 1.

It should be noted that, the method 900 is described by using interaction between the terminal device 120 and the network device 110 as an example. However, the network device 110 may alternatively be a network device 150, and behaviors of the network device 110 and the network device 150 are basically the same. For ease of description, that the terminal device 120 and the network device 150 perform an interaction procedure shown in the method 900 is not described below again.

It should be further noted that, in the foregoing solutions, this application supports mutual combinations of embodiments, such as a combination of the method shown in FIG. 5 and the method shown in FIG. 9, or a combination of the method shown in FIG. 5 and the method shown in FIG. 7. This is not limited.

Finally, an apparatus embodiment in embodiments of this application is described.

To implement functions in the methods provided in this application, both a terminal device and a network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

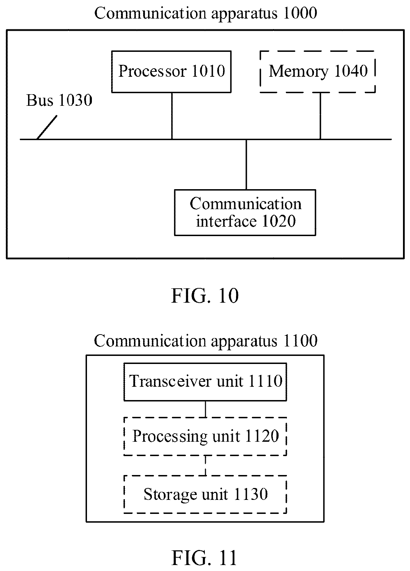

FIG. 10 is a block diagram of a communication apparatus 1000 according to an embodiment of this application. The communication apparatus 1000 includes a processor 1010 and a communication interface 1020. The processor 1010 and the communication interface 1020 may be connected to each other through a bus 1030. The communication apparatus 1000 may be a network device 110 or a network device 150, or may be a terminal device 120.

Optionally, the communication apparatus 1000 may further include a memory 1040. The memory 1040 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 1040 is configured for related instructions and data.

The processor 1010 may be one or more central processing units (central processing units, CPUs). When the processor 1010 is one CPU, the CPU may be a single-core CPU, or may be a multi-core CPU. The processor 1010 may be a signal processor, a chip, another integrated circuit that can implement the methods in this application, or a part of circuits that are in the foregoing processor, chip, or integrated circuit and that are configured to perform a processing function. In addition, the communication interface 1020 may alternatively be an input/output interface. The input/output interface is configured to input or output a signal or data, or may be an input/output circuit.

When the communication apparatus 1000 is the terminal device 120, for example, the processor 1010 is configured to perform the following operations: sending an identifier 1 and an identifier 2 to the network device 150; receiving response information 1 from the network device 150; and the like.

When the communication apparatus 1000 is the network device 150, for example, the processor 1010 is configured to perform the following operations: receiving, from the terminal device 120, an identifier 1 and an identifier 2; obtaining model information of a model 1 based on the identifier 1 and the identifier 2; sending response information 1 to the terminal device 120; and the like.

When the communication apparatus 1000 is the network device 110, for example, the processor 1010 is configured to perform the following operations: sending an identifier 1 and an identifier 2 to the terminal device 120; and the like.

The content is merely used as an example for description. When the communication apparatus 1000 is the network device 110, the network device 150, or the terminal device 120, the communication apparatus 1000 is responsible for performing a method or step related to the network device 110, the network device 150, or the terminal device 120 in the foregoing method embodiments.

It may be understood that, when the communication apparatus 1000 is the terminal device 120, the network device 110, or the network device 150, the communication interface 1020 may also be referred to as a transceiver. The foregoing descriptions are merely examples. For specific content, refer to the content shown in the foregoing method embodiments. For implementations of the operations in FIG. 10, refer to the corresponding descriptions of the method embodiments shown in FIG. 5 to FIG. 9.

FIG. 11 is a block diagram of a communication apparatus 1100 according to an embodiment of this application. The communication apparatus 1100 may be a network device 110, a network device 150, or a terminal device 120, or may be a chip or a module in the network device 110, the network device 150, or the terminal device 120, to implement the method in the foregoing embodiments. The communication apparatus 1100 includes a transceiver unit 1110. The following describes the transceiver unit 1110 by using an example.

The transceiver unit 1110 may include a sending unit and a receiving unit. The sending unit is configured to execute a sending action of the communication apparatus, and the receiving unit is configured to execute a receiving action of the communication apparatus. For ease of description, in this embodiment of this application, the sending unit and the receiving unit are combined into one transceiver unit. This is described herein once for all, and details are not described below again.

When the communication apparatus 1100 is the terminal device 120, for example, the transceiver unit 1110 is configured to send an identifier 1 and an identifier 2 to the network device 150. The transceiver unit 1110 is further configured to receive response information 1 from the network device 150, and the like.

Optionally, the communication apparatus 1100 may further include a processing unit 1120, configured to perform content related to steps such as processing and coordination of the terminal device 120. For example, the processing unit 1120 is configured to perform, with the network device 110, an identification procedure of a model 1.

When the communication apparatus 1100 is the network device 110, for example, the transceiver unit 1110 is configured to send an identifier 1 and an identifier 2 to the terminal device; and the like.

Optionally, the communication apparatus 1100 may further include a processing unit 1120, configured to perform content related to steps such as processing and coordination of the network device 110. For example, the processing unit 1120 is configured to perform, with the terminal device 120, an identification procedure of a model 1, and the like.

The content is merely used as an example for description. When the communication apparatus 1100 is the network device 110, the network device 150, or the terminal device 120, the communication apparatus 1100 is responsible for performing a method or step related to the network device 110, the network device 150, or the terminal device 120 in the foregoing method embodiments.

Optionally, the communication apparatus 1100 further includes a storage unit 1130. The storage unit 1130 is configured to store a program or code used to perform the foregoing method.

The apparatus embodiments shown in FIG. 10 and FIG. 11 are used for implementing the content described in FIG. 5 to FIG. 9. For specific execution steps and methods of the apparatuses shown in FIG. 10 and FIG. 11, refer to the content described in the foregoing method embodiments.

This application further provides a chip, including a processor, configured to invoke instructions from a memory and run the instructions stored in the memory, to cause a communication device on which the chip is installed to perform the method in the foregoing examples.

This application further provides another chip, including an input interface, an output interface, and a processor. The input interface, the output interface, and the processor are connected through an internal connection path. The processor is configured to execute code in a memory; and when the code is executed, the processor is configured to perform the method in the foregoing examples. Optionally, the chip further includes the memory, and the memory is configured to store a computer program or the code.

This application further provides a processor, configured to be coupled to a memory, and configured to perform a method and a function of the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiment is implemented.

Another embodiment of this application provides a computer-readable storage medium. The computer-readable storage medium stores a computer program. When the computer program is executed by a computer, the method in the foregoing embodiments is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, the disclosed system, apparatus, and method may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, in other words, may be located in one position, or may be distributed on a plurality of network units. A part of or all of the units may be selected according to actual requirements to achieve the objectives of the solutions of embodiments.

In addition, functional units in embodiments of this application may be integrated into one processing unit, or each unit may exist alone physically, or two or more units may be integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but are not intended to limit the protection scope of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A method for managing artificial intelligence, comprising:
sending a first identifier and a second identifier to a first network device, wherein the first identifier is an identifier configured for a first model and is from a second network device, the first model is a model successfully identified between the second network device and a terminal device, the second identifier identifies a first area, the first identifier is unique in the first area, and the first identifier comprises at least one of a model identifier and a function identifier; and
receiving response information from the first network device, wherein the response information indicates whether the first model is available.

2. The method according to claim 1, wherein the response information indicates that the first model is available; and the method further comprises:
receiving a third identifier from the first network device, wherein the third identifier is an identifier configured by the first network device for the first model; or
that the response information indicates that the first model is available comprises:
the response information comprises the third identifier.

3. The method according to claim 1, wherein the response information indicates that the first model is unavailable; and the method further comprises:
receiving at least one of a second model and information about the second model from the first network device, wherein the information about the second model is for activating the second model;
receiving, from the first network device, information indicating to fall back to a non-artificial intelligence AI mode; or
receiving, from the first network device, information indicating to perform a complete identification procedure; or
that the response information indicates that the first model is unavailable comprises one of the following:
the response information comprises the at least one of the second model and the information about the second model;
the response information comprises the information indicating the terminal device to fall back to the non-AI mode; or
the response information the information indicating the terminal device to perform the complete identification procedure.

4. The method according to any one of claims 1 to 3, wherein the response information comprises the first identifier.

5. The method according to any one of claims 1 to 4, wherein a type of the second identifier comprises at least one of the following:
a cell identifier, a cell group identifier, a tracking area identifier, a service area identifier, or a timing advance group identifier, wherein
an association relationship exists between a type of the first area and the type of the second identifier.

6. The method according to any one of claims 1 to 5, wherein an area of the second network device belongs to the first area.

7. The method according to any one of claims 1 to 6, wherein the method further comprises: receiving the first identifier from the second network device.

8. The method according to claim 7, wherein the first identifier is carried in at least one of the following messages:
a random access message, a radio resource control RRC configuration request message, an RRC configuration complete message, an RRC reconfiguration complete message, an RRC reestablishment request message, or a physical layer message.

9. The method according to any one of claims 1 to 8, wherein the method further comprises: receiving the second identifier from the second network device.

10. The method according to claim 9, wherein the second identifier is carried in at least one of the following messages:
a random access message, a radio resource control RRC configuration request message, an RRC configuration complete message, an RRC reconfiguration complete message, an RRC reestablishment request message, or a physical layer message.

11. The method according to any one of claims 1 to 10, wherein
the first network device manages a first cell, wherein the first cell is a cell on which the terminal device currently camps; and
the second network device manages a second cell, wherein the second cell is a source cell of the terminal device.

12. A method for managing artificial intelligence, performed by a second network device or a chip used in the second network device, wherein the method comprises:
receiving a first identifier and a second identifier from a terminal device, wherein the first identifier is an identifier configured by a first network device for a first model, the first model is a model successfully identified between the first network device and the terminal device, the second identifier identifies a first area, the first identifier is unique in the first area, and the first identifier comprises at least one of a model identifier and a function identifier;
obtaining model information of the first model based on the first identifier and the second identifier, and determining whether the first model is available; and
sending response information to the terminal device, wherein the response information indicates whether the first model is available.

13. The method according to claim 12, wherein the response information indicates that the first model is available; and the method further comprises:
sending a third identifier to the terminal device, wherein the third identifier is an identifier configured by the second network device for the first model; or
that the response information indicates that the first model is available comprises:
the response information comprises the third identifier.

14. The method according to claim 12, wherein the response information indicates that the first model is unavailable; and the method further comprises:
sending at least one of a second model and information about the second model to the terminal device, wherein the second model is different from the first model, and the information about the second model is for activating the second model;
indicating the terminal device to fall back to a non-AI mode; or
indicating the terminal device to perform a complete identification procedure; or
that the response information indicates that the first model is unavailable comprises:
the response information comprises the at least one of the second model and the information about the second model;
the response information comprises information indicating the terminal device to fall back to the non-AI mode; or
the response information the information indicating the terminal device to perform the complete identification procedure.

15. The method according to any one of claims 12 to 14, wherein the response information comprises the first identifier.

16. The method according to any one of claims 12 to 15, wherein a type of the second identifier comprises at least one of the following:
a cell identifier, a cell group identifier, a tracking area identifier, a service area identifier, or a timing advance group identifier, wherein
an association relationship exists between a type of the first area and the type of the second identifier.

17. The method according to any one of claims 12 to 16, wherein an area of the first network device belongs to the first area.

18. The method according to any one of claims 12 to 17, wherein the first identifier is carried in at least one of the following messages:
a random access message, a radio resource control RRC configuration request message, an RRC configuration complete message, an RRC reconfiguration complete message, an RRC reestablishment request message, or a physical layer message.

19. The method according to any one of claims 12 to 18, wherein the second identifier is carried in at least one of the following messages:
a random access message, a radio resource control RRC configuration request message, an RRC configuration complete message, an RRC reconfiguration complete message, an RRC reestablishment request message, or a physical layer message.

20. The method according to any one of claims 12 to 19, wherein
the second network device manages a first cell, wherein the first cell is a cell on which the terminal device currently camps; and
the first network device manages a second cell, wherein the second cell is a source cell of the terminal device.

21. A method for managing artificial intelligence, performed by a second network device or a chip used in the second network device, wherein the method comprises:
receiving model information of a first model from a first network device, wherein the first model is a model successfully identified between the first network device and a terminal device;
performing identification processing on the first model based on the model information of the first model, and determining whether the first model is available; and
sending indication information to the terminal device, wherein the indication information indicates whether the first model is available.

22. The method according to claim 21, wherein the indication information indicates that the first model is available; and the method further comprises:
sending a first identifier to the terminal device, wherein the first identifier identifies the first model.

23. The method according to claim 22, wherein the first identifier is unique in a first area, and an area of the second network device belongs to the first area.

24. The method according to claim 22 or 23, wherein the first identifier is carried in at least one of the following messages:
a random access message, a radio resource control RRC configuration request message, an RRC configuration complete message, an RRC reconfiguration complete message, an RRC reestablishment request message, or a physical layer message.

25. The method according to claim 21, wherein the indication information indicates that the first model is unavailable; and the method further comprises:
sending at least one of a second model and information about the second model to the terminal device, wherein the second model is different from the first model, and the information about the second model is for activating the second model.

26. A method for managing artificial intelligence, performed by a terminal device or a chip used in the terminal device, wherein the method comprises:
sending indication information to a network device, wherein the indication information indicates that update processing has been performed on a first model, and the first model is a model successfully identified between the network device and the terminal device.

27. The method according to claim 26, wherein the method further comprises:
receiving response information from the network device, wherein the response information comprises an identifier configured by the network device for the updated first model, or the response information indicates to inherit an identifier of the first model.

28. The method according to claim 26 or 27, wherein the indication information comprises any one of the following:
information about performance of the updated first model, or the identifier of the first model.

29. A method for managing artificial intelligence, performed by a network device or a chip used in the network device, wherein the method comprises:
receiving indication information from a terminal device, wherein the indication information indicates that update processing has been performed on a first model, and the first model is a model successfully identified between the terminal device and the network device; and
sending response information to the terminal device based on the indication information, wherein the response information comprises an identifier configured by the network device for the updated first model, or the response information indicates to inherit an identifier of the first model.

30. The method according to claim 29, wherein the indication information comprises any one of the following:
information about performance of the updated first model, or the identifier of the first model.

31. A method for managing artificial intelligence, performed by a terminal device or a chip used in the terminal device, wherein the method comprises:
receiving indication information from a network device, wherein the indication information indicates to deregister an identifier of at least one model; and
deregistering the identifier of the at least one model based on the indication information, wherein each of the at least one model is a model successfully identified between the network device and the terminal device.

32. The method according to claim 31, wherein before the receiving the indication information from the network device, the method further comprises:
sending request information to the network device, wherein the request information is for requesting to deregister the identifier of the at least one model.

33. The method according to claim 32, wherein the request information comprises at least one of the following:
an identifier of each of the at least one model, or model information of each of the at least one model.

34. The method according to any one of claims 31 to 33, wherein the indication information comprises at least one of the following:
the identifier of each of the at least one model, or the model information of each of the at least one model.

35. The method according to any one of claims 31 to 34, wherein the method further comprises:
sending response information to the network device, wherein the response information indicates whether the indication information is successfully received.

36. A method for managing artificial intelligence, performed by a network device or a chip used in the network device, wherein the method comprises:
sending indication information to a terminal device, wherein the indication information indicates to deregister an identifier of at least one model, and each of the at least one model is a model successfully identified between the terminal device and the network device.

37. The method according to claim 36, wherein the method further comprises:
receiving request information from the terminal device, wherein the request information is for requesting to deregister the identifier of the at least one model.

38. The method according to claim 36 or 37, wherein the method further comprises:
receiving response information from the terminal device, wherein the response information indicates whether the indication information is successfully received.

39. The method according to claim 37 or 38, wherein the request information comprises at least one of the following:
an identifier of each of the at least one model, or model information of each of the at least one model.

40. The method according to any one of claims 36 to 39, wherein the indication information comprises at least one of the following:
the identifier of each of the at least one model, or the model information of each of the at least one model.

41. A method for managing artificial intelligence, performed by a terminal device or a chip used in the terminal device, wherein the method comprises:
receiving a first model configuration message and first radio resource control configuration information from a network device, wherein the first model configuration information is for activating a first model, and the first radio resource control configuration information is for configuring the first radio resource control configuration; and
when the first model configuration information conflicts with the first radio resource control configuration information, determining, based on a priority of the first model configuration information and a priority of the first radio resource control configuration information, to ignore the first model configuration information or the first radio resource control configuration information.

42. The method according to claim 41, wherein the determining, based on the priority of the first model configuration information and the priority of the first radio resource control configuration information, to ignore the first model configuration information or the first radio resource control configuration information comprises:
determining, based on a priority of signaling for carrying the first model configuration information and a priority of signaling for carrying the first radio resource control configuration information, to ignore the first model configuration information or the first radio resource control information.

43. The method according to claim 42, wherein when the priority of the signaling for carrying the first model configuration information is higher than the priority of the signaling for carrying the first radio resource control configuration information, the method comprises:
determining to ignore the first radio resource control configuration information.

44. The method according to claim 42, wherein when the priority of the signaling for carrying the first radio resource control configuration information is higher than the priority of the signaling for carrying the first model configuration information, the method comprises:
determining to ignore the first model configuration information.

45. A communication apparatus, comprising a processor, wherein the processor is configured to:
by executing a computer program or instructions, or through a logic circuit,
cause the communication apparatus to perform the method according to any one of claims 1 to 11;
cause the communication apparatus to perform the method according to any one of claims 12 to 20;
cause the communication apparatus to perform the method according to any one of claims 21 to 25;
cause the communication apparatus to perform the method according to any one of claims 26 to 28;
cause the communication apparatus to perform the method according to either of claims 29 and 30;
cause the communication apparatus to perform the method according to any one of claims 31 to 35;
cause the communication apparatus to perform the method according to any one of claims 36 to 40; or
cause the communication apparatus to perform the method according to any one of claims 41 to 44.

46. The apparatus according to claim 45, wherein the communication apparatus further comprises a memory, and the memory is configured to store the computer program or the instructions.

47. The apparatus according to claim 45 or 46, wherein the communication apparatus further comprises a communication interface, and the communication interface is configured to input and/or output a signal.

48. A communication apparatus, comprising a processing circuit and an input/output interface, wherein the input/output interface is configured to input and/or output a signal, and the processing circuit is configured to perform the method according to any one of claims 1 to 44.

49. A computer-readable storage medium, wherein the computer-readable storage medium stores a computer program or instructions, and when the computer program or the instructions are run on a computer, the method according to any one of claims 1 to 44 is performed.

50. A computer program product, comprising instructions, wherein when the instructions are run on a computer, the method according to any one of claims 1 to 44 is performed.
